# EUROPEAN PATENT SPECIFICATION

(11) **EP 1 702 266 B1**
(45) Date of publication and mention of the grant of the patent: **01.08.2007**
(21) Application number: 04808188.9
(22) Date of filing: 28.12.2004
(51) Int. Cl.: G06F 11/14

(54) **CONTENT MANAGEMENT APPARATUS**
INHALTSVERWALTUNGSVORRICHTUNG
APPAREIL DE GESTION DE CONTENU

(30) Priority: 08.01.2004 JP 2004003528
(43) Date of publication of application: 20.09.2006
(73) Proprietor: Matsushita Electric Industrial Co., Ltd., Kadoma-shi, Osaka 571-8501 (JP)
(72) Inventor: SHIBATA, Yasuhiro c/o Matsushita Electric Ind. Co. Ltd., Chuo-ku, Osaka-shi, Osaka 540-6319 (JP); KAWASAKI, Masahiro c/o Matsushita Electric Ind. Co. Ltd., Chuo-ku, Osaka-shi, Osaka 540-6319 (JP)
(74) Representative: Balsters, Robert
(86) International application number: PCT/JP2004/019838
(87) International publication number: WO 2005/066839

(56) References cited:
- EP-A- 1 158 410
- US-A1- 2001 008 016

## Description

### Technical Field

The present invention relates to a technique for backing up and restoring content.

### Background Art

At present, music digital content can be distributed via network. Therefore, anyone can easily buy digital content on line. Usually, the digital content bought on line is stored in a hard disk drive of a Personal Computer (PC), a Secure Digital (SD) memory card and the like, and managed by music content management software.

In the case where content is provided in a conventional state of being stored in a Read-Only Media, as long as the media is not physically broken, the content can semipermanently exist and be reproduced.

However, in the case where the digital content bought on line is stored in a hard disk drive of a PC or a SD memory card, the content might be deleted by mistake. This is because the hard disk of the PC and the SD memory card are Read and Write Memories. Once content is deleted, it cannot be reproduced.

Also, the hard disk drive of the PC has a higher possibility of breaking down than the Read-Only Media. In the case where the hard disk drive breaks down, the content cannot be reproduced. In addition, since the SD memory card is so small that it might get lost. In the case where the SD memory card gets lost as well, the content cannot be reproduced.

In view of the above mentioned problems, consumers hope to deal with the case where the content bought on line cannot be reproduced.

Usually, in the case where music content management software records music content in a hard disk of a PC, the software executes its original encryption process. Therefore, the music content stored in the hard disk can only be duplicated but not reproduced by music content management softwares of other PCs. Thus, the music content stored in the hard disk cannot be easily duplicated.

Also, a key used when decoding music content is encrypted and stored in an area unknown to public, so as to prevent the music content from being illegally duplicated. Therefore, even on the same PC, if an Operating System (OS) is reinstalled, the key gets lost. Thus, the music content stored in the hard disk cannot be reproduced again.

In order to address the above mentioned problem, there is a backup and restore software for executing backup and restore of the music content managed by the music content management software. In the present specification, "restore" means not only restoring the content into the memory where the content was stored before, but also storing the content into another memory.

The backup and restore software transmits a user ID and a serial number of the music content management software to an authentication server of the Internet, so as to obtain a permission for backup from the authentication server. Only in the case where the permission is obtained, the backup and restore software can backup the music content stored in the hard disk. The music content can be backed up in other hard disks or external media such as a CD-Recordable (CD-R). In every case, the backed up music content is encrypted, thus cannot be easily reproduced.

As described above, in the case where the backed up music content is restored, the backup and restore software transmits the user ID and the serial number of the music content management software to the authentication server of the Internet, so as to obtain a permission for restore from the authentication server. Only in the case where the permission is obtained, the backup and restore software restores the backed up music content into the hard disk or a portable memory such as the CD-R or the SD memory card. In such case, the backup and restore software places a key for decoding music content under the management of the music content management software. In the case where the content is restored a plurality of times within a certain period, the authentication server outputs a warning and information indicating restore prohibition, so as to prevent illegal duplication.

The US patent application US 2001/008016 discloses a content management system for preventing unauthorized duplication of copy-protected content by storing on a storage medium an encrypted content, encrypted licensing information involving a decryption key for decrypting said encrypted content and a secure storage-medium-specific number, which has been used for encrypting said licensing information. A backup copy of the license information is used to restore the original license information by decrypting the backup license information using said secured medium-specific number, thus, also rendering decryption of the encrypted content impossible.

From the document EP 115 8410 A, a music content distribution system for down loading music contents together with use log information to a personal computer over the web for storage on a PC hard disk is known, whereby also backup data of the contents and of the use log information is stored on the PC hard disk. Restoration of lost contents can be performed either from the stored backup data using said stored use log information or through re-downloading following an authentication process with a music content server over the web.

### Disclosure of Invention

However, there is a problem that the above mentioned technique has not solved yet.

In the case where backup and restore are executed using backup and restore software, the user attempting to execute backup and restore must be authenticated by the authentication server. Due to the psychological pressure on the user attempting to execute illegal duplication, easy duplication can be prevented. Also, in the case where restore is executed a plurality of times within a certain period, the authentication server executes operations such as prohibitting further restoration so as to prevent illegal duplication. However, content providers desire that a perfect method for preventing illegal duplication be realized. And, users desire that the backup and restore process for avoiding content loss be simplified.

An object of the present invention, which is defined in detail in the appended independent claims, is to provide a content management apparatus and reproduction apparatus which can prevent illegal duplication of content, and simplify user's backup and restore process on content.

In order to achieve the above mentioned object, a content management apparatus according to the present invention manages a content stored in a portable medium, the apparatus including: a content storage unit operable to store a content; a backup unit operable to (i) duplicate a content stored in the first portable medium into the content storage unit and (ii) associate the content with a medium identifier of the first portable medium, so as to store the associated Information into a management table inside the content management apparatus, in the case where the content stored in the first portable medium is requested to be backed up into the content storage unit; a restore unit operable to (i) duplicate the content duplicated in the content storage unit into the second portable medium and (ii) replace the medium identifier of the first portable medium, stored in the management table with a medium identifier of the second portable medium, in the case where the content duplicated in the content storage unit is requested to be restored into the second portable medium; and a management table processing unit operable to transmit, to a reproduction apparatus, reproduction judgment information, based on the management table, for judging a permission to reproduce the content, the reproduction apparatus attempting to reproduce the content stored in the portable medium.

Thus, the content management apparatus according to the present invention (i) duplicates the content duplicated in the content storage unit into the second portable medium and (ii) replaces the medium identifier of the first portable medium stored in the management table with a medium identifier of the second portable medium, in the case where the content is requested to be restored into the second portable medium. By permitting reproduction of only the content stored in the portable medium which has the medium identifier stored in the management table, the illegal duplication of content can be prevented, and the user's backup and restore process on content can be simplified.

As an example of the reproduction judgment information, there is a judgment result in the case where it is judged whether or not the content management apparatus permits content reproduction. As another example of the reproduction judgment information, there is the management table per se. In other words, the reproduction judgment information is the information for judging whether or not the content reproduction is permitted, based on the management table.

The management table processing unit may transmit the reproduction judgment information indicating permission to reproduce the content to the reproduction apparatus, in the case where the medium identifier of the portable medium in which the content is stored is stored in the management table.

Also, the reproduction judgment information may be the management table. In such case, the management table processing unit may (i) transmit the management table to the reproduction apparatus, and (ii) store, into the management table storage unit, transmission completion information indicating that the management table has been transmitted. Only in the case where the transmission completion information is not stored in the management table storage unit, the restore unit may duplicate the content duplicated in the content storage unit into the second portable medium. The transmission completion information may be the identifier of the reproduction apparatus.

Also, in the case where the reproduction apparatus informs that the management table is not necessary, the management table processing unit may delete the transmission completion information stored in the management table storage unit.

In addition, the content management apparatus according to the present invention may further include a clock showing time, wherein in the case where the reproduction apparatus requests transmission of the management table, the management table processing unit may store, into the management table storage unit, an expiration time of the management table to be transmitted, and in the case where time shown by the clock exceeds the expiration time, the management table processing unit may delete the transmission completion information stored in the management table storage unit.

According to the present invention, an available memory card can be appropriately managed using the management table. And, it is guaranteed that there is only one memory card that can be used even if backup and restore are executed on the content. Thus, there is effect that backup can be executed in preparation for the loss of the content whose duplication is prohibited.

Also, according to the present invention, in the case where the management table is lent out (transmitted) to the reproduction apparatus, by prohibiting restore, illegal duplication can be prohibited. Thus, there is effect that, for example, in the case where the reproduction apparatus is a portable reproduction apparatus, the reproduction apparatus can be freely taken out to outside so as to reproduce the content.

In addition, according to the present invention, even in the case where the management table is not returned after it had been lent out, restore can be executed after a certain period. Thus, even in the case where the reproduction apparatus which is the lend-out destination of the management table loses the management table, there is effect that the content can be reproduced.

Moreover, the content management apparatus according to the present invention reproduces a content stored in a portable medium, the apparatus including: a request unit operable to request, to a content management apparatus, transmission of reproduction judgment information, based on a management table, for judging a permission to reproduce the content, the content management apparatus storing the management table in which an identifier associated with the content is stored; a reception unit operable to receive the reproduction judgment information from the content management apparatus; and a reproduction unit operable to reproduce the content only in the case where the reproduction judgment information indicates a permission for reproducing the content.

Furthermore, the present invention can be realized as (i) a method having, as steps, respective feature component of each of the above mentioned content management apparatus and reproduction apparatus, (ii) a program including the above mentioned steps, (iii) a storage medium such as a CD-ROM in which the program is stored, or (iv) an integrated circuit. The program can be distributed via a transmission medium such as a communication network.

### Brief Description of Drawings

These and other objects, advantages and features of the invention will become apparent from the following description thereof taken in conjunction with the accompanying drawings that illustrate a specific embodiment of the invention. In the Drawings:
FIG. 1 is a diagram for describing an overview of the first embodiment;
FIG. 2 is a structure diagram showing each apparatus and a memory card according to the first embodiment;
FIG. 3 is a diagram showing a data structure of a management table;
FIG. 4 is a diagram showing a data structure of a backup flag;
FIG. 5 is a display of the screen for causing a user to select backup or restore;
FIG. 6 is a flow chart showing procedures for backup and restore, according to the first embodiment;
FIG. 7 is a flow chart showing procedures for reproducing content according to the first embodiment;
FIG. 8 is a flow chart showing a backup process according to the first embodiment;
FIG. 9 is a diagram showing a situation where content is backuped, and a management table and a backup flag after backup;
FIG. 10 is a flow chart showing a restore process according to the first embodiment;
FIG. 11 is a display of the screen for content to be restored;
FIG. 12A is a diagram showing a management table before restore;
FIG. 12B is a diagram showing a management table after restore;
FIG. 13 is a flow chart showing a reproduction process of content according to the first embodiment;
FIG. 14 is a flow chart showing a reproduction permission judgment process of content according to the first embodiment;
FIG. 15 is a diagram showing the case where a part of the components is replaced with an integrated circuit, the components being included in the content management apparatus and the reproduction apparatus according to the first embodiment;
FIG. 16 is a structure diagram showing each apparatus and a memory card according to the second embodiment;
FIG. 17 is a diagram showing a data structure of a lend-out management table;
FIG. 18 is a display of the screen for causing a user to select backup, restore or management table lend-out;
FIG. 19 is a flow chart showing a process for judging backup, restore and management table lend-out, according to the second embodiment;
FIG. 20 is a flow chart showing a process for reproducing content reproduction and judging management table return;
FIG. 21 is a flow chart showing a lend-out process of management table according to the second embodiment;
FIG. 22 is a flow chart showing a process for recording and updating lend-out information management table according to the second embodiment;
FIG. 23 is a flow chart showing a restore process according to the second embodiment;
FIG. 24 is a flow chart showing a confirmation process of lent-out management table according to the second embodiment;
FIG. 25 is a flow chart showing a content reproduction process according to the second embodiment;
FIG. 26 is a flow chart showing a process for judging reproduction permission of content according to the second embodiment;
FIG. 27 is a flow chart showing a returning process of management table in a reproduction apparatus according to the second embodiment;
FIG. 28 is a flow chart showing a returning process of management table in a content management apparatus according to the second embodiment;
FIG. 29 is a flow chart showing an entry delete process in the lend-out information management table in the case where the management table is returned, according to the second embodiment;
FIG. 30 is a diagram showing the case where a part of the components is replaced with an integrated circuit, the components being included in the content management apparatus and the reproduction apparatus according to the second embodiment;
FIG. 31 is a structure diagram of each apparatus and a memory card according to the third embodiment;
FIG. 32 is a diagram showing a data structure of a lend-out information management table according to the third embodiment;
FIG. 33 is a diagram showing a display example when setting an expiration time for management table lend-out, according to the third embodiment;
FIG. 34 is a flow chart showing a lend-out process of management table according to the third embodiment;
FIG. 35 is a flow chart showing a recording and updating process of lend-out information management table according to the third embodiment;
FIG. 36 is a flow chart showing a confirmation process of lent-out management table according to the third embodiment;
FIG. 37 is a flow chart showing a delete process of a lend-out information management table by a timer, according to the third embodiment; and
FIG. 38 is a flow chart showing a reproduction permission judgment process according to the third embodiment; and
FIG. 39 is a diagram showing the case where a part of the components is replaced with an integrated circuit, the components being included in the content management apparatus and the reproduction apparatus according to the third embodiment;

### Best Mode for Carrying Out the Invention

The best mode for carrying out the present invention will be described in reference to the drawings as follows.

### (First Embodiment)

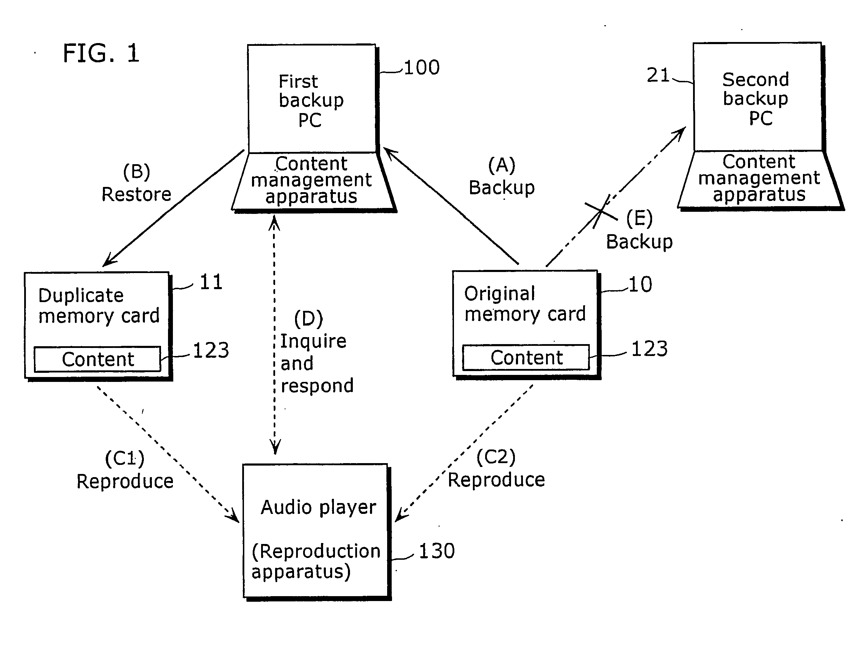

The overview of the first embodiment will be described using FIG. 1. FIG. 1 is a diagram for describing the overview of the first embodiment.

In preparation for the case where the original memory card 10 gets lost, a user backups the content 123 stored in the original memory card 10 into the first backup PC100 which is a content management apparatus (A). In such case, the first backup PC100 stores a card unique ID of the original memory card 10. The card unique ID is an identifier assigned to each memory card when manufactured, so as to identify each memory card.

It is prohibited to backup content stored in a memory card into a plurality of content management apparatuses. In other words, if the content 123 stored in the original memory card 10 is backed up into the first backup PC100, it is prohibited that the content 123 be backed up into the second backup PC21 (E).

In the cas where a user loses the original memory card 10, the content 123 backed up in the first backup PC100 is restored into a duplicate memory card 11 (B). In such case, the first backup PC100 replaces the stored card unique ID with a card unique ID of a duplicate memory card 11.

Next, the case where a user reproduces the content 123 stored in the original memory card 10 or the duplicate memory card 11 using a n audio player 130 which is a reproduction apparatus will be described. In such case, the audio player 130, by transmitting a card unique ID, inquires the first backup PC100 whether or not it is permitted to reproduce the content 123 (D).

In the case where the first backup PC100 stores the card unique ID of the memory card In which the content 123 to be reproduced is stored, the first backup PC100 permits reproduction, and outputs the permission information to the audio player 130 (D). When the audio player 130 receives the permission information, the audio player 130 reproduces the content 123 (C1, C2).

On the other hand, in the case where the first backup PC 100 does not store the card unique ID of the memory card in which the content 123 to be reproduced is stored, the first backup PC 100 outputs information indicating non-permission for reproduction to the audio player 130 (D). When the audio player 130 receives the non-permission information, the audio player 130 cannot reproduce the content 123 (C1, C2).

As described above, the audio player 130 can reproduce only the content 123 stored in the memory card to which the card unique ID is assigned, the card unique ID being held by the first backup PC 100 (C1, C2).

As a result, in the case where a user loses the original memory card 10, by restoring the content 123 into the duplicate memory card 11, the content 123 can be reproduced. Even if the lost original memory card 10 appears, the content 123 stored in the original memory card 10 cannot be reproduced. As described above, while backing up and restoring the content is realized, the same content can be prevented from being duplicated into a plurality of memory cards in a reproducible state.

The above mentioned operations will be specifically described as follows.

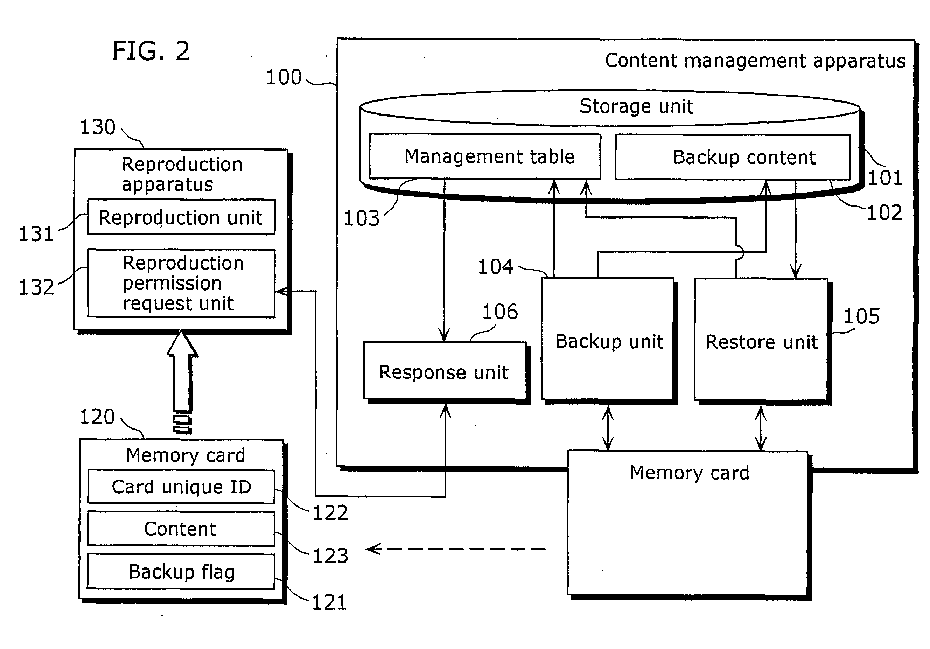

First, using FIG. 2, the internal structures of the content management apparatus 100, the memory card 120 and the reproduction apparatus 130 will be described.

The content management apparatus 100 includes: a storage unit 101; a backup unit 104; a restore unit 105; and a response unit 106.

In the storage unit 101, (i) backup content 102 which is backed up content 123 stored in the memory card 120, and (ii) a management table 103 are stored.

The memory card 120 includes: a backup flag 121; a card unique ID. 122; and content 123.

The reproduction apparatus 130 includes: a reproduction unit 131 and a reproduction permission request unit 132.

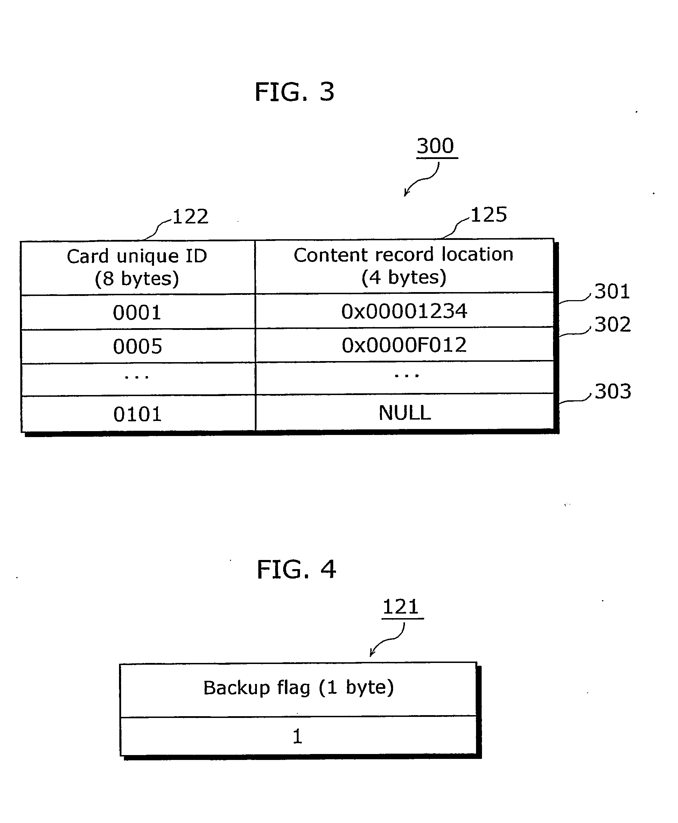

Next, the data structure of the management table 101 stored in the storage unit 101 will be described using FIG. 3.

The management table 103 is a table 300 including a card unique ID 122 and a content recording location 125. The card unique ID 122 is identification information which uniquely specifies the memory card 120. The content recording location 125 is information indicating a storage location of backed up content of music, moving pictures and the like in the storage unit 101 of the content management apparatus 100.

Next, the backup flag 121 stored in the memory card 120 will be described using FIG. 4.

The backup flag 121 indicates whether or not the content 123 stored in the memory card 120 is backed up. In the case where the content 123 is already backed up "1" is stored. In the case where the content 123 is not backed up yet, "0" is stored.

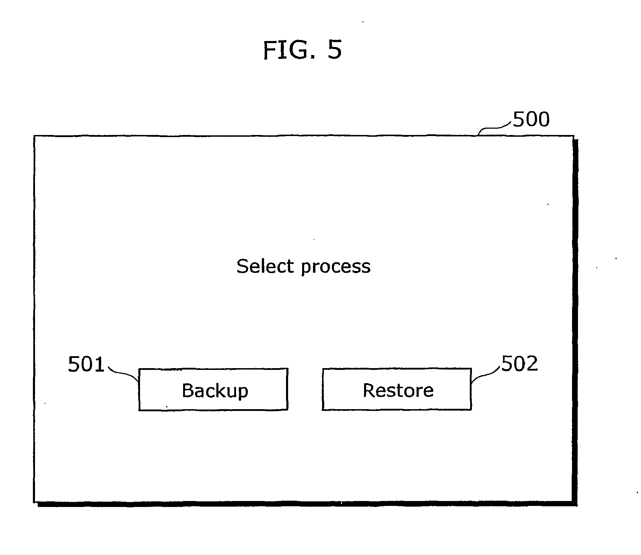

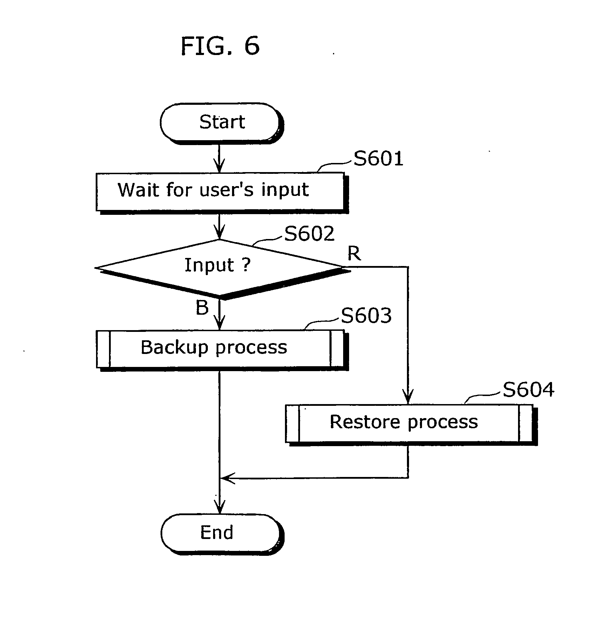

Next, the procedures in the case where the content 123 is backed up and restored will be described using FIG. 5 and FIG. 6.

In the case where the content 123 stored in the memory card 120 is backuped or restored, a user first inserts the memory card 120 into a slot set in the content management apparatus 100. When the user activates an application for executing backup and restore, the content management apparatus 100 displays a display 500 for causing the user to select backup or restore, so as to wait for the user's input (S601).

When the user selects "backup" 501 (B in S602), the content management apparatus 100 executes a backup process (S603). The details of the backup process will be described later.

When the user selects "restore" 502 (R in S602), the content management apparatus 100 executes a restore process (S604). The details of the restore process will be described later.

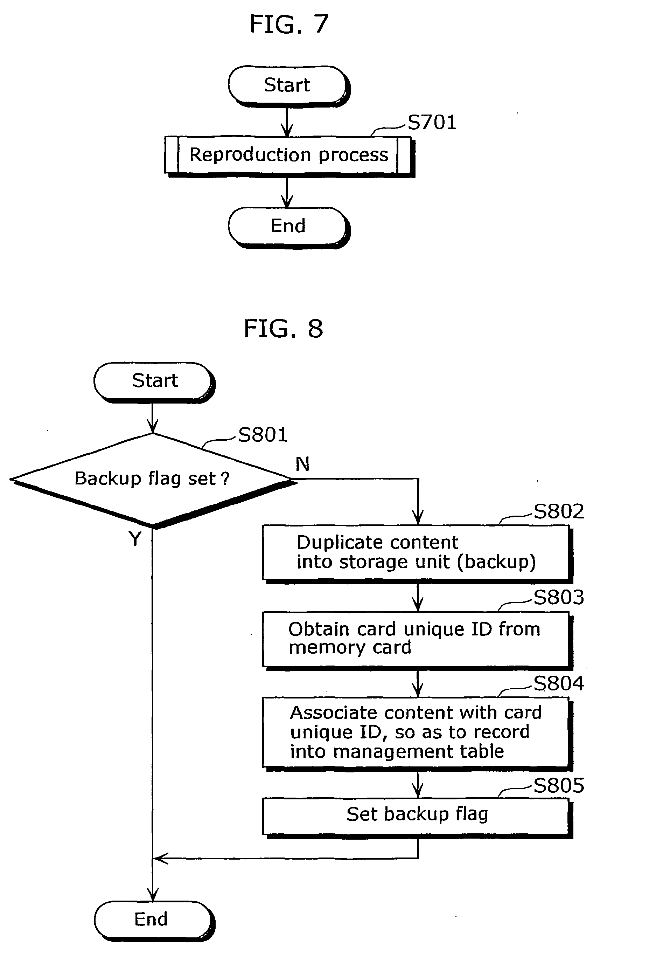

Next, the procedures for reproducing the content 123 will be described using FIG. 7.

When the user inserts the memory card into the reproduction apparatus 130, and directs the reproduction apparatus 130 to reproduce the content 123, the reproduction apparatus 130 executes a reproduction process on the content 123 (S701). The details of the reproduction process will be described later.

Next, using FIG. 8, the backup process will be described.

When a user directs backup, the backup unit 104 checks whether or not the backup flag 121 in the memory card 120 is set (S801).

In the case where the backup flag 121 is set (Y in S801), that is, in the case where it is indicated that the content 123 of the memory card 120 are already backed up (Y in S801), the backup unit 104 stops the backup process.

On the other hand, in the case where the backup flag 121 is not set (N in S801), the backup unit 104 duplicates the content 123 of the memory card 120 into the storage unit 101 (S802). In other words, the backup unit 104 backs up the content 123 of the memory card 120 into the storage unit 101 (S802).

The content 123 of the memory card 120 is encrypted using the key unique to the memory card 120. Thus, the backup unit 104 reads the content 123 while decoding with the above mentioned key, so as to duplicate the content 123 while re-encrypting using the above mentioned key.

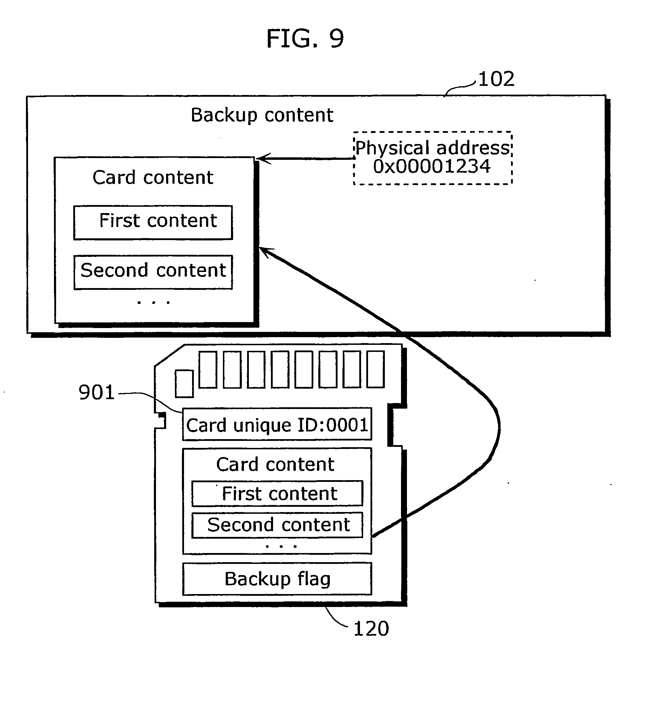

When the duplication of the content 123 is completed, the backup unit 104 obtains the card unique ID 122 from the memory card 120 (S803). As shown in FIG. 9, the card unique ID 122 is stored, for example, as "0001" in a predetermined area 901 of the memory card 120. After obtaining the card unique ID 122, the backup unit 104 associates the obtained card unique ID 122 with the content storage location information for specifying the duplicated content 123, so as to record the associated information into the management table 103 of the storage unit 101 (S804).

Here, as the content storage location information for specifying the duplicated content 123, the recording location of the content 123 in the storage unit 101 can be used. For example, in the case where the content management apparatus 100 is a PC, a hard disk can be used as the storage unit 101. As shown in FIG. 3, the recording location of the content 123 can be the recording location 125 in the hard disk.

After the above mentioned processes end, the backup unit 104 sets, in the backup flag 121 of the memory card 120, a value indicating that the backup is completed (S805). For example, as shown in FIG. 4, the backup unit 104 changes (i) the backup flag 121 which was "0" indicating reset to (ii) "1" indicating that backup is completed. When the memory card 120 is initialized, the backup flag 121 is reset, thereby backup can be executed again.

The management table 103 can store the entry of a plurality of pairs of card unique IDs 122 and content recording locations 125. As shown in FIG. 3, for example, if the memory card whose card unique ID "0001" is backed up under the state where nothing is stored in the management table 103, the card unique ID "0001" and the recording location "0x00001234" of the duplicated content are associated with each other and stored in the first entry 301 of the management table 103. Next, if the memory card whose card unique ID is "0005" is backed up, the card unique ID "0005" and the recording location of the duplicated content "0x0000F012" are associated with each other and stored in the second entry 302 of the management table 103.

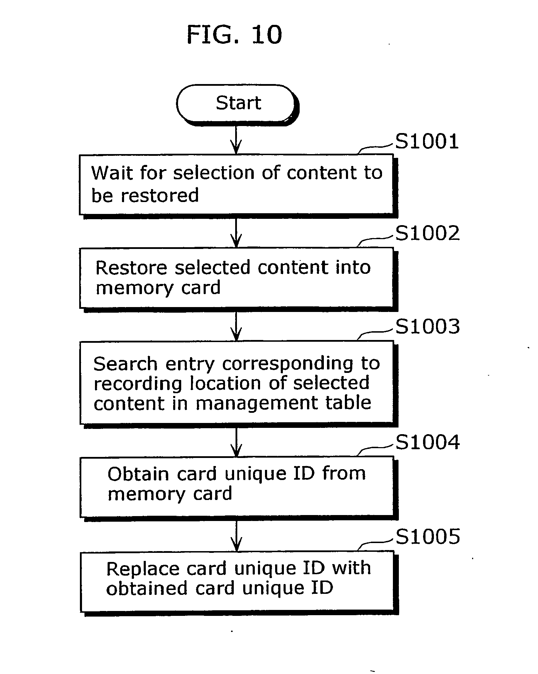

Next, the restore process will be described using FIG. 10, FIG. 11 and FIG. 12.

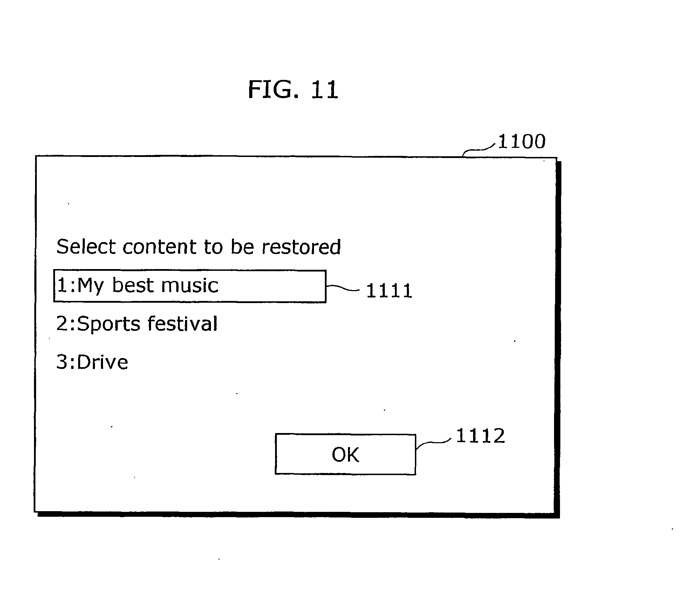

When a user directs restore, the restore unit 105 displays a list of content 1100 as shown in FIG. 11, and wait for the input of direction indicating which of the content backed up in the storage unit 101 should be restored (S1001).

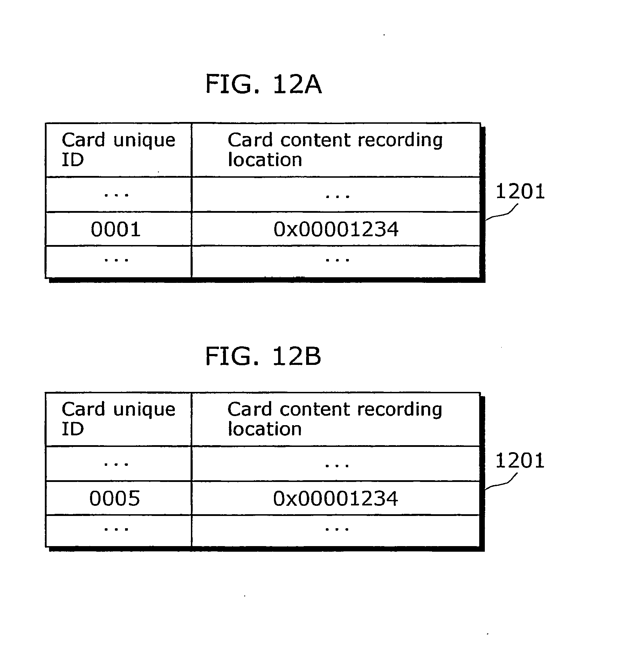

When a user selects content desired to be restored, and directs the restore unit 105 to execute restore, the restore unit 105 restores the selected content into the memory card 120 (S1002). As an example, it is assumed that a user selects "1: my best music" 1111, and pushes a restore execution button 1112 as shown in FIG. 11. In the case where the selected content is stored in the physical address "0x00001234" 1201 (refer to FIG. 12), the restore unit 105 reads out the content stored in "0x00001234", so as to restore the content into the memory card 120 (S1002).

Here, the backed up content is encrypted using the key unique to the content management apparatus 100. Thus, the restore unit 105 reads the content from the storage unit 101 while decoding using the key unique to the content management apparatus 100, so as to restore while reencrypting using the key unique to the memory card 120 (S1002).

After the content restore is completed, the restore unit 105 searches an entry which corresponds with the recording location of the restored content in the management table 103 (S1003). For example, in the case where the recording location of the content is "0x00001234", the restore unit 105 searches an entry of the "content recording location" which is "Ox00001234" in the management table 103. Here, as shown in FIG. 12A, the selected content recording location "0x00001234" and the card unique ID "0001" are associated with each other as the entry 1201.

When an entry which corresponds with the recording location of the selected card content is successfully searched, the restore unit 105 obtains the card unique ID 122 from the memory card 120 in which the content is restored (S1004). For example, the card unique ID is "0005"

When the card unique ID 122 is successfully obtained, the restore unit 105 replaces (i) the card unique ID associated with the specified content recording location with (ii) the card unique ID 122 obtained in S1004 (S1005). For example, as shown in FIG. 12B, the restore unit 105 replaces (i) the card unique ID "0001" associated with the selected card content recording location "0x0000124" as the entry 1201 with (ii) the newly obtained card unique ID "0005".

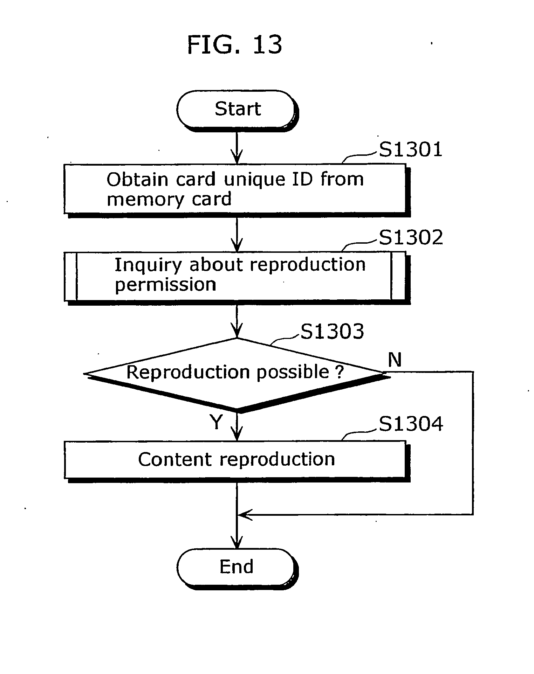

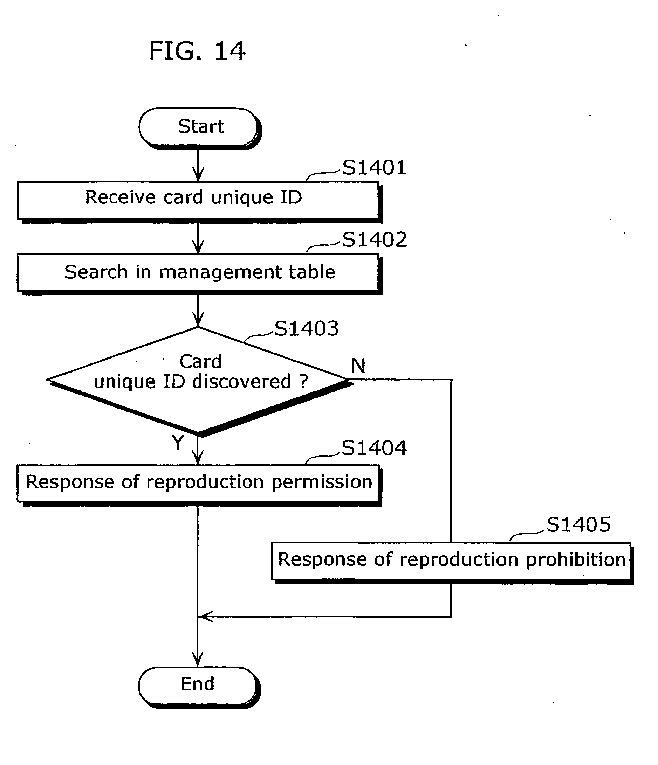

Finally, the content reproduction process in the reproduction apparatus 130 will be described using FIG. 13 and FIG. 14.

When reproducing content, the reproduction apparatus 130 inquires the content management apparatus 100 whether or not the content stored in the attached memory card 120 can be reproduced. In such case, the reproduction apparatus 130 transmits the card unique ID of the attached memory card 120 to the content management apparatus 100. As a result of the inquiry, only in the case where the reproduction is permitted by the content management apparatus 100, the reproduction apparatus 130 reproduces the content of the attached memory card.

The specific examples of content reproduction will be described as follows.

In the case where content is reproduced by the reproduction apparatus 130, the user previously connects the reproduction apparatus 130 and the content management apparatus 100, via cable or radio.

When the user inserts the memory card 120 into the reproduction apparatus 130, so as to attempt to reproduce the content 123, the reproduction permission request unit 132 of the reproduction apparatus 130 obtains the card unique ID 122 from the memory card 120 (S1301). Next, the reproduction permission request unit 132 inquires the content management apparatus 100 whether or not the content of the inserted memory card 120 can be reproduced (S1302). In such case, the reproduction permission request unit 132 transmits the obtained card unique ID 122 to the content management apparatus 100 (S1302).

The response unit 106 of the content management apparatus 100 which has received the inquiry searches the card unique ID 122 received from the reproduction apparatus 130 in the management table 103 (S1402). In the case where the card unique ID 122 which has been inquired for is discovered (Y in S1403), the response unit 106 transmits the reproduction permission information indicating reproduction permission to the reproduction apparatus 130 (S1404). On the other hand, in the case where the card unique ID 122 is not discovered (N in S1403), the response unit 106 transmits the reproduction non-permission information indicating reproduction prohibition to the reproduction apparatus 130 (S1405).

Only in the case where the reproduction permission request unit 132 receives the reproduction permission information (Y in S1303), the reproduction unit 131 of the reproduction apparatus 130 reproduces the content 123 in the attached memory card (S1304).

As described above, the content management apparatus 100 stores the card unique ID122 of the available memory card 120, and updates the management table 103 so as to store only the card unique ID 122 of the memory card 120 which is the restore destination.

When reproducing content, the reproduction apparatus 130 (i) transmits the card unique ID122, and (ii) inquires whether or not the content can be reproduced to the content management apparatus 100. Only in the case where the transmitted card unique ID 122 exists in the management table 103, the reproduction apparatus 130 can reproduce the content. In other words, after restore, the old memory card cannot be used. As a result, even if a plurality of memory cards including content of the same details exist, only one memory card can be used. Thus, content backup and restore can be executed while preventing illegal duplication.

According to the first embodiment, the card unique ID 122 is stored in the management table 103 when executing backup. However, it is inconvenient for a user if backup must be executed every time content is reproduced in the reproduction apparatus 130. Thus, only the card unique ID 122 can be stored in the management table 103 without duplicating content. In such case, for example, as shown in FIG. 3, NULL is stored, as the entry 303, in the content storage destination address of the management table 103, thereby it can be clearly distinguished from the case where backup is executed.

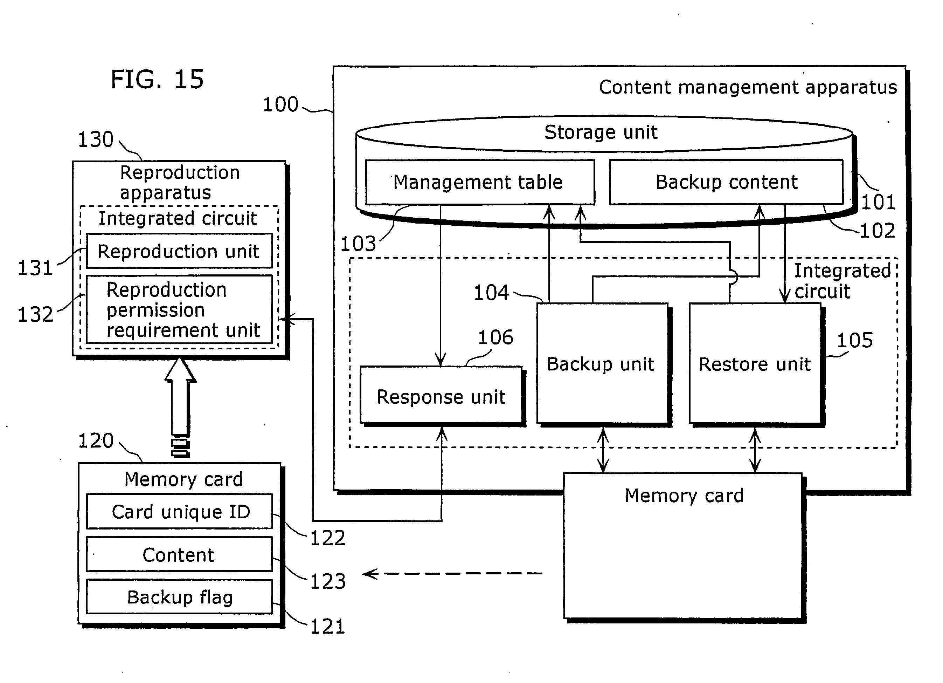

Also, the components surrounded by the broken lines in the content management apparatus 100 as shown in FIG. 15, that is, the backup unit 104, the restore unit 105 and the response unit 106 may be realized by the integrated circuit. Similarly, the components surrounded by the broken lines in the reproduction apparatus 130 as shown in FIG. 15, that is, the reproduction unit 131 and the reproduction permission request unit 132 may be realized by the integrated circuit.

### (Second Embodiment)

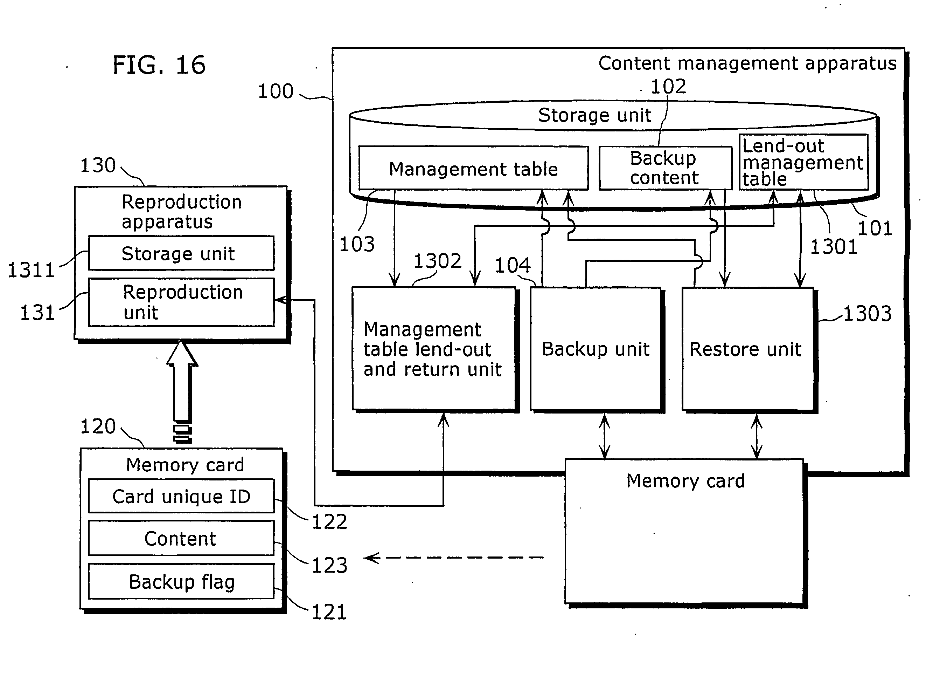

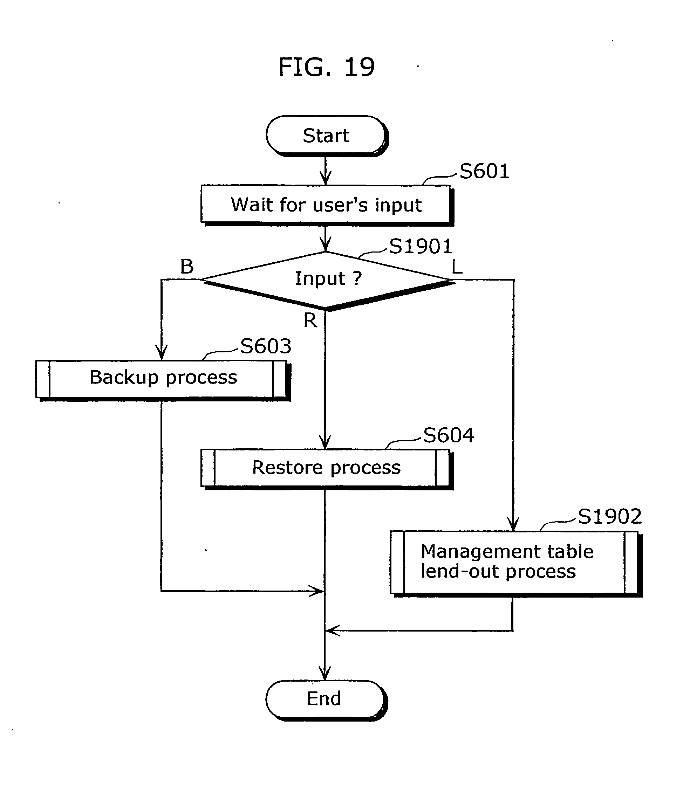

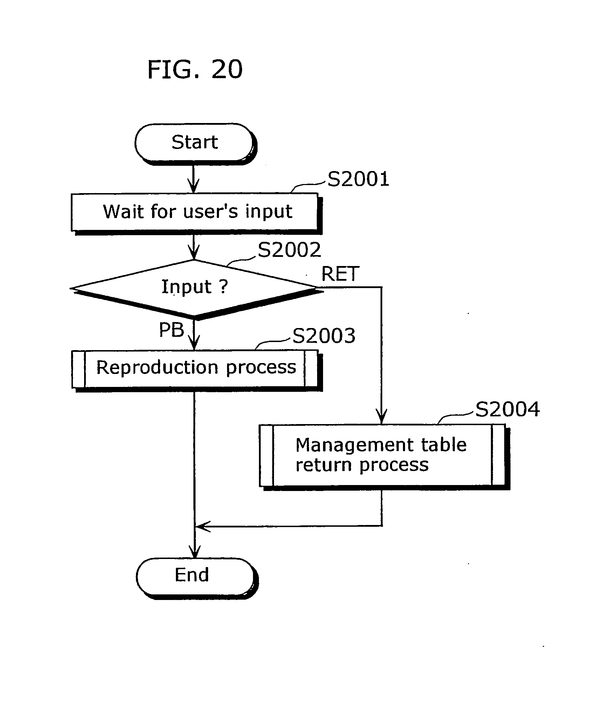

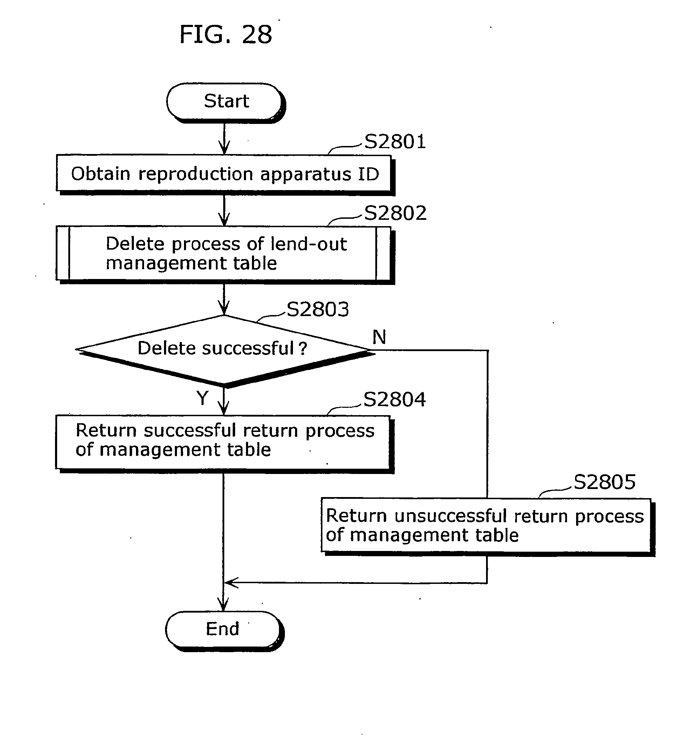

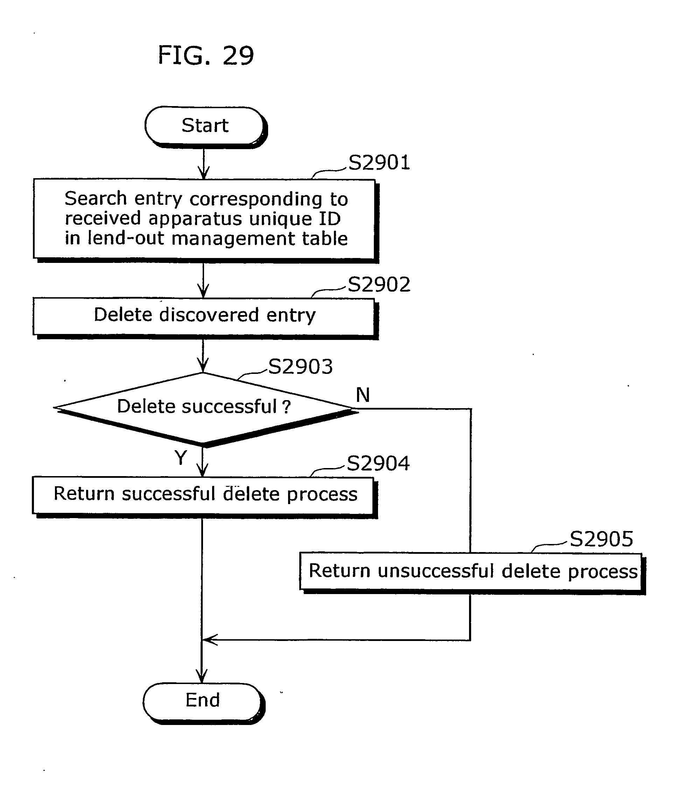

According to the second embodiment, the content management apparatus 100 lends out the management table 103 to the reproduction apparatus 130, and the reproduction apparatus 130 judges whether or not the content can be reproduced. The processes of backup, restore and reproduction in such case will be described using FIG. 16 to FIG. 29.

As shown in FIG. 16, the content management apparatus 100 includes: a storage unit 101; a backup unit 104; a restore unit 1303; a management table lend-out and return unit 1302.

The storage unit 101 includes: a backup content 102; a management table 103; and a lend-out management table 1301.

The memory card 120 includes: a backup flag 121; a card unique ID 122; and content 123.

The reproduction apparatus 130 includes a reproduction unit 131 and a storage unit 1311.

Next, the data structures of the management table 103 and the lend-out management table 1301 will be described. The structure of the management table 103 is the same as described in the first embodiment.

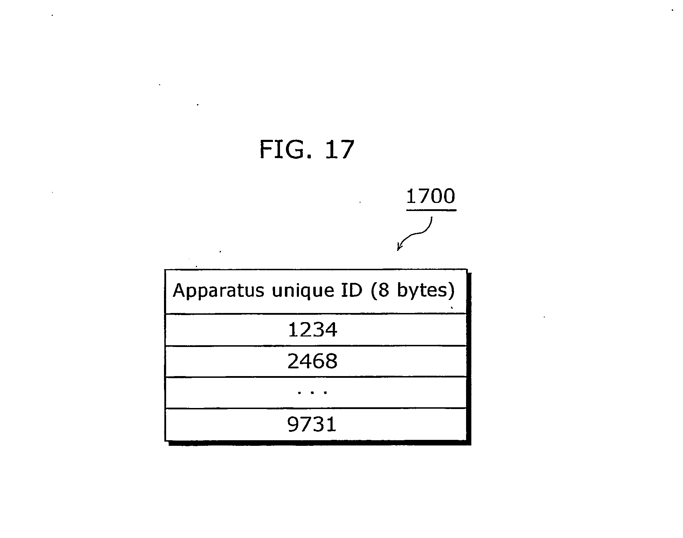

The lend-out management table 1301 includes a table 1700 made up of apparatus unique IDs as shown in FIG. 17. Here, the apparatus unique ID is identifying information which uniquely specifies a reproduction apparatus.

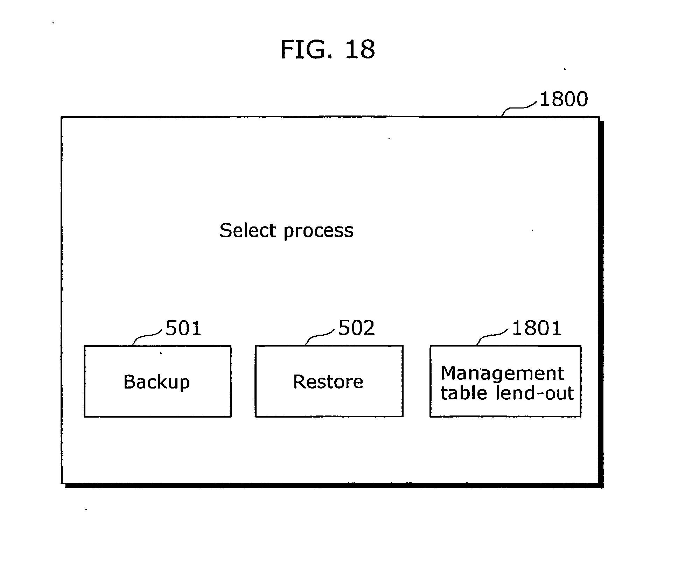

Next, lend-out and return processes of the management table 103, content backup, restore and reproduction will be described using FIG. 18 to FIG. 20.

In the case where the management table 103 is lent out to the reproduction apparatus 130, the user previously connects the reproduction apparatus 130 and the content management apparatus 100 via cable or radio. Also, in the case where the memory card 120 is backed up or restored, the user previously inserts the memory card 120 into the content management apparatus 100.

When the user activates an application for executing the above mentioned processes, as shown in FIG. 18, the content management apparatus 100 displays a display 1800 for causing the user to select a process type, and waits for the user's input (S601).

When the user selects "management table lend-out" 1801 in order to lend out the management table 103 to the reproduction apparatus 130 (L in S 1901), the content management apparatus 100 executes a lend-out process of the management table 103 (S1902).

When the user selects "backup" 501 (B in S1901), the content management apparatus 100 executes a backup process (S603).

In addition, when the user selects "restore" 502 (R in S1901), the content management apparatus 100 executes a restore process (S604).

When the user inserts the memory card 120 Into the reproduction apparatus 130 in order to reproduce the content 123 in the memory card 120, the reproduction apparatus 130 waits for the user's input (S2001).

When the user directs the reproduction apparatus 130 to reproduce content (PB in S 2002), the reproduction apparatus 130 executes the reproduction process on the content (S2003).

When the user directs the reproduction apparatus 130 to return the management table 103 (RET in S2002), the reproduction apparatus 130 executes a return process of the management table 103 (S2004).

Next, the processes of the content management apparatus 100 and the reproduction apparatus 130 in the case where the user directs the lend-out of the management table 103, restore and reproduction will be described. The backup process is the same as described in the first embodiment, and the describing will be omitted here.

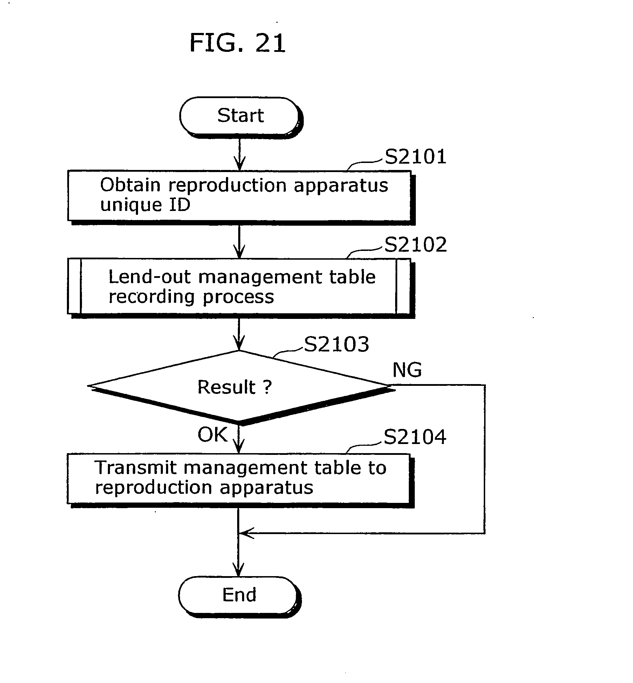

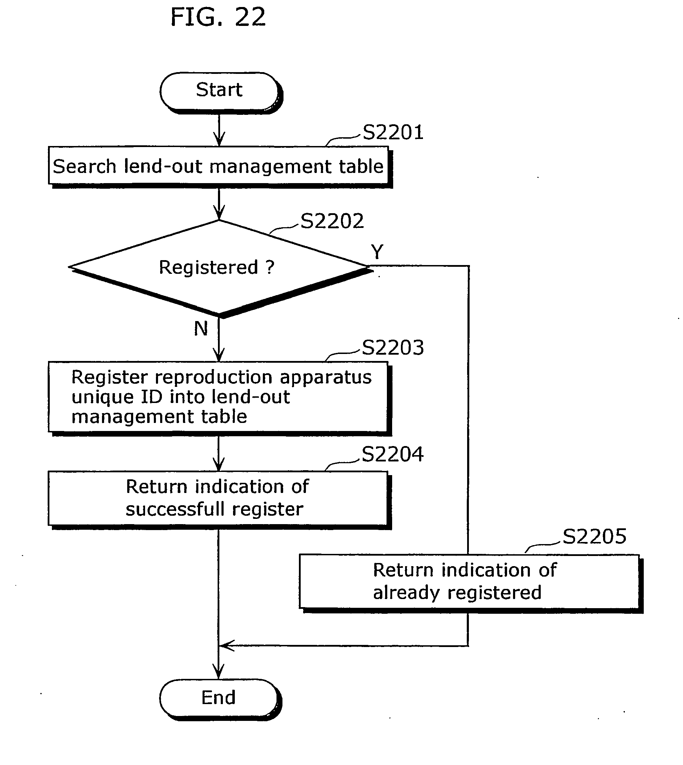

First, the lend-out process of the management table 103 will be described using FIG. 21 and FIG. 22.

When the user directs the lend-out of the management table 103, the management table lend-out and return unit 1302 of the content management apparatus 100 obtains the apparatus unique ID of the reproduction apparatus 130 (S2101). Next, the management table lend-out and return unit 1302 searches the obtained apparatus unique ID in the lend-out management table 1301 (S2201). In the case where the apparatus unique ID is not discovered (N in S2202), the management table lend-out and return unit 1302 records the obtained apparatus unique ID into the lend-out management table 1301 (S2203). When the recording into the lend-out management table is successful (OK in S2103), the management table lend-out and return unit 1302 lends out the management table 103 to the reproduction apparatus 130 (S2104). In other words, the management table lend-out and return unit 1302 transmits information about the management table 103 to the reproduction apparatus 130 (S2104).

For example, in the case where the apparatus unique ID of the reproduction apparatus 130 which requests the lend-out of the management table 103 is "1234", "1234" 1701 is stored into the lend-out management table 1301. When the recording is successful, the management table 103 is lent out to the reproduction apparatus 130.

The reproduction apparatus 130 which has received the management table 103 from the content management apparatus 100 stores the received management table 103 into the storage unit 1311.

On the other hand, in the case where the same apparatus unique ID is stored in the lend-out management table 1301 (Y in S2202), the information about the management table 103 is not transmitted to the reproduction apparatus 130.

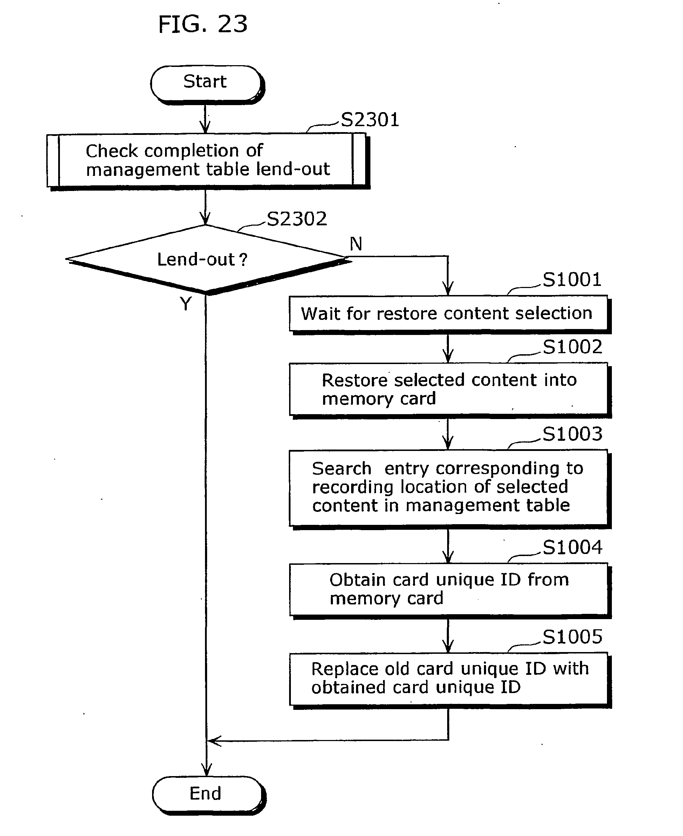

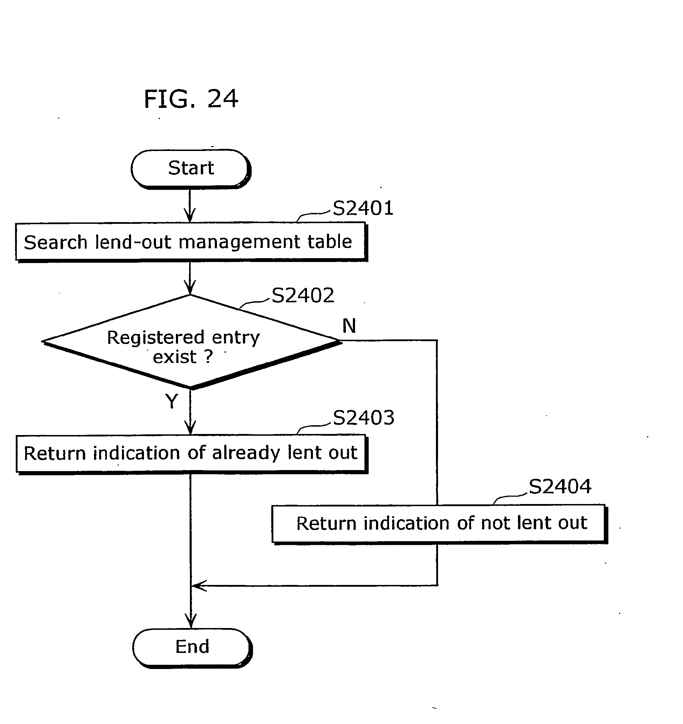

Next, the restore process will be described using FIG. 23 and FIG. 24.

When the user directs the restore, prior to the restore, the restore unit 1303 searches the apparatus unique ID in the lend-out management table 1301 (S2401). As a result of the search, in the case where the apparatus unique ID is stored, that is, in the case where the management table 103 is lent out (Y in S2302), the restore process ends.

On the other hand, in the case where nothing is stored in the lend-out management table 1301, that is, in the case where the management table 103 is not lent out (N in S2302), the restore unit 1303 executes the restore process. The details of the restore process (from S1001 to S1005) are the same as the first embodiment, and the describing will be omitted here.

As described above, in the case where the management table 103 is lent out to the reproduction apparatus 130, restore is prohibited, thus illegal duplication can be prevented.

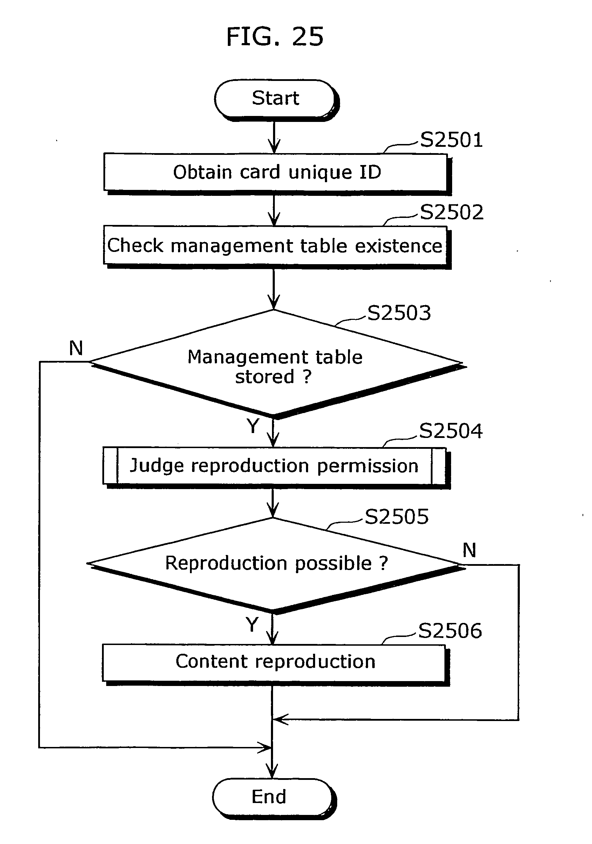

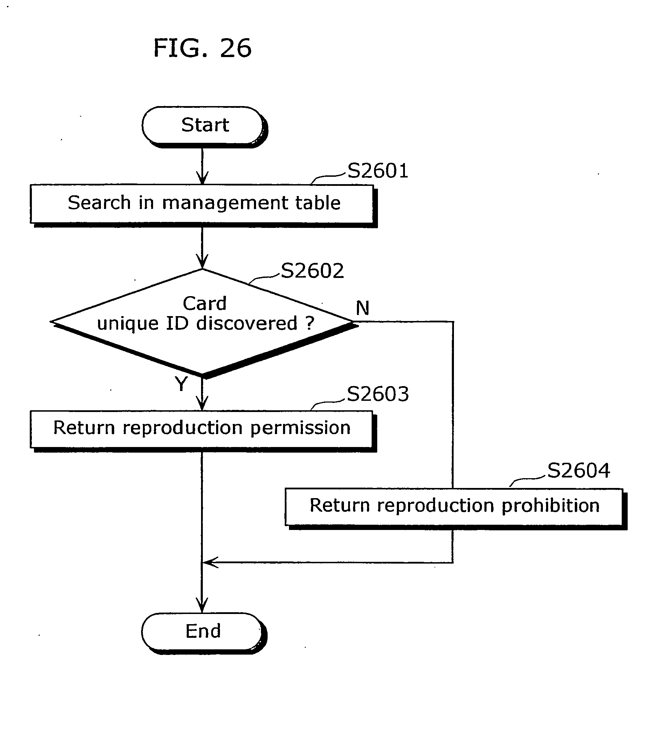

Finally, the content reproduction process in the reproduction apparatus 130 will be described using FIG. 25 and FIG. 26. Here, the process for judging whether or not the content can be reproduced, using the management table 103 lent out by the reproduction apparatus 130 will be described. The process in which the reproduction apparatus 130 is connected to the content management apparatus 100, and the content management apparatus 100 judges whether or not the content can be reproduced is already described in the first embodiment, and the describing is omitted here. The case where the reproduction apparatus 130 is not connected to the content management apparatus 100 in time of reproduction process will be assumed as follows.

When the memory card 120 is inserted into the reproduction apparatus 130, and the user directs the reproduction of the content 123, the reproduction unit 131 obtains the card unique ID 122 from the memory card 120 (S2501). When the card unique ID 122 is successfully obtained, the reproduction unit 131 checks whether or not the management table 103 is stored in the storage unit 1311 of the reproduction apparatus 130 (S2502).

In the case where the management table 103 is stored (Y in S2503), the reproduction unit 131 judges whether or not the content 123 can be reproduced (S2504), using the stored management table 103. Only in the case where it is judged that the reproduction is permitted (Y in S2505), the content 123 is reproduced (S2506).

On the other hand, in the case where the management table 103 is not stored (N in S2503), the reproduction unit 131 does not reproduce the content 123.

In the case where it is judged whether or not the content 123 can be reproduced using the management table 103 which exists in the reproduction apparatus 130 (S2504), the reproduction unit 131 searches the obtained card unique ID 122 in the management table 103 (S2601). As a result of the search, in the case where the obtained card unique ID 122 is discovered (Y in S2602) the reproduction unit 131 judges that the reproduction is permitted (S2603). On the other hand, in the case where the obtained card unique ID 122 is not discovered (N in S2602), the reproduction unit 131 judges that the reproduction is prohibited (S2604).

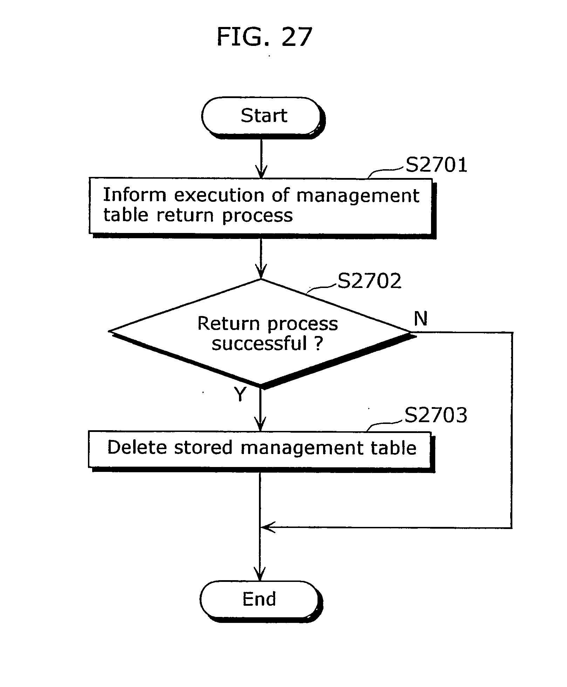

Next, the return process of the management table 103 from the reproduction apparatus 130 to the content management apparatus 100 will be described using FIG. 27 to FIG. 29.

A user previously connects the reproduction apparatus 130 and the content management apparatus 100 via cable or radio.

When the user directs the reproduction apparatus 130 to return the management table 103 (RET in S2002), the reproduction apparatus 130 informs the content management apparatus 100 of the fact that the return process of the management table 103 is executed (S2701).

Based on the above mentioned notification, the management table lend-out and return unit 1302 of the content management apparatus 100 obtains the apparatus unique ID of the reproduction apparatus 130 (S2801). Next, the content management apparatus 100 deletes the apparatus unique ID of the reproduction apparatus 130 from the lend-out management table 1301 (S2802). The above mentioned delete process is as follows.

The management table lend-out and return unit 1302 searches a received apparatus unique ID in the lend-out management table 1301 (S2901). When the entry including the corresponding apparatus unique ID is discovered, the management table lend-out and return unit 1302 deletes the discovered entry (S2902). After that, the delete process is ended (S2803).

In the case where the delete is successful (Y in S2803), the management table lend-out and return unit 1302 returns the information that the return process of the management table 103 is successful to the reproduction apparatus 130 (S2804). On the other hand, in the case where the delete is unsuccessful (N in S2803), the management table lend-out and return unit 1302 returns the information that the return process of the management table 103 is unsuccessful to the reproduction apparatus 130 (S2805).

When the information that the return process is successful is returned from the content management apparatus 100 (Y in S2702), the reproduction apparatus 130 deletes the stored management table 103 (S2703). On the other hand, when the information that the return process is unsuccessful is returned from the content management apparatus 100 (N in S2702), the return process of the management table 103 ends.

As described above, based on the notification indicating the return of the management table 103 from the reproduction apparatus 130, the management table lend-out and return unit 1302 deletes the apparatus unique ID from the lend-out management table 1301. When all of the apparatus unique IDs are deleted from the lend-out management table 1301, the content can be restored again.

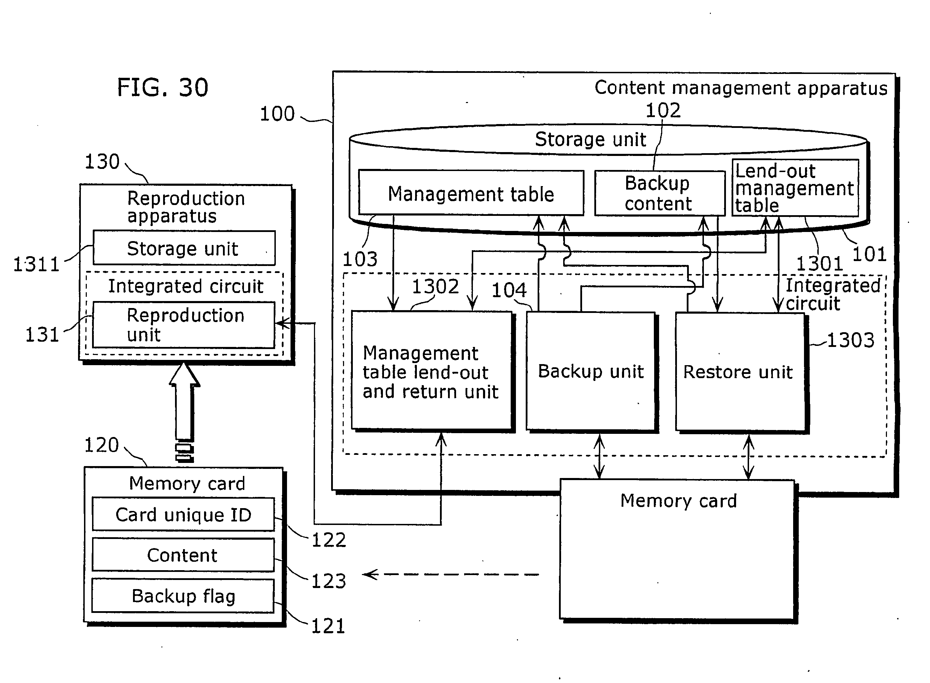

The components surrounded by the broken lines in the content management apparatus 100 as shown in FIG. 30, that is, the backup unit 104, the restore unit 1303 and the management table lend-out and return unit 1302 can be realized by the integrated circuit. Similarly, the component surrounded by the broken lines in the reproduction apparatus 130 as shown in FIG. 30, that is, the reproduction unit 131 can be realized by the integrated circuit.

### (Third Embodiment)

In the third embodiment, the process in which expiration time is set in the lent-out management table 103 in the case where the management table 103 is lent out to the reproduction apparatus 130 will be described.

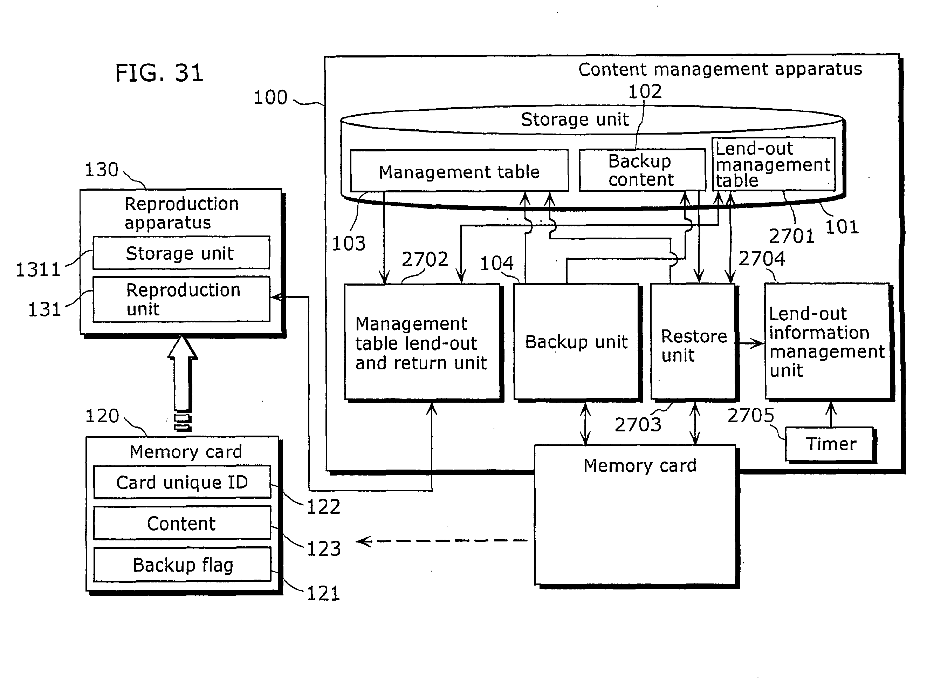

First, referring to FIG. 31, the internal structures of a content management apparatus 100, a memory card 120 and a reproduction apparatus 130 will be described.

The content management apparatus 100 includes: a storage unit 101; a backup unit 104; a restore unit 2703; a management table lend-out and return unit 2702; a lend-out information management unit 2704; and a timer 2705.

Backup content 102, a management table 103, and a lend-out management table 2701 are stored in the storage unit 101.

The memory card 120 includes: a backup flag 121; a card unique ID 122; and content 123.

The reproduction apparatus 130 includes a reproduction unit 131 and a storage unit 1311.

Next, the data structures of the management table 103 and the lend-out management table 2701 will be described.

The structure of the management table 103 is the same as described in the first embodiment.

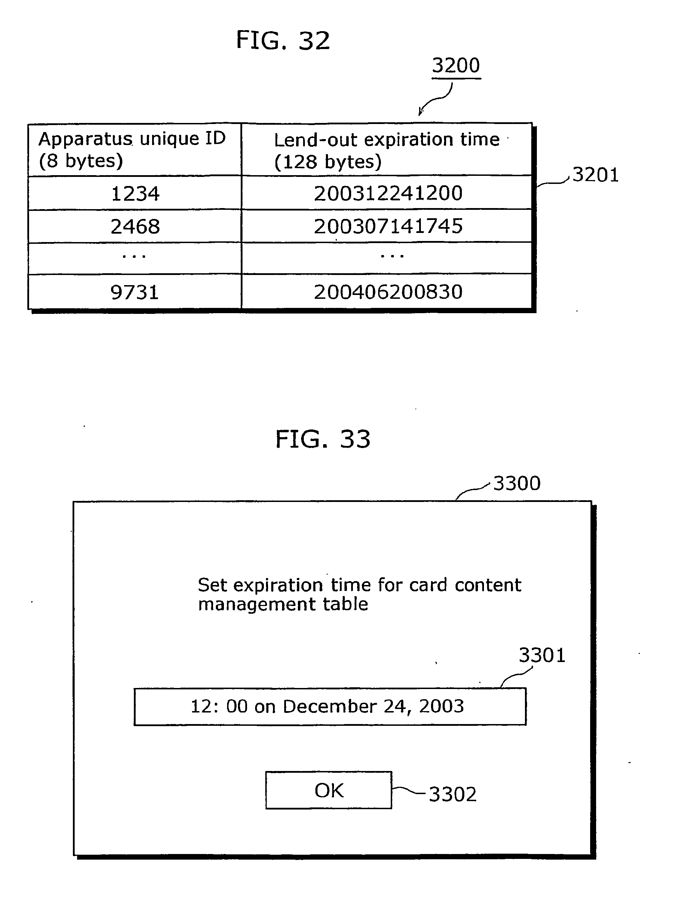

As shown in FIG. 32, the lend-out management table 2701 includes a table 3200 made up of the entry of a plurality of pairs of apparatus unique ID and lend-out expiration time. Here, the apparatus unique ID is identifying information for uniquely specifying the reproduction apparatus 130. The lend-out expiration time indicates the deadline until when the management table 103 to be lent out to the reproduction apparatus 130 can be used. When the time expires, the management table 103 that has been lent out becomes invalid.

The processes for executing lend-out and return of the management table 103, content backup, restore and reproduction are the same as the second embodiment, and the describing will be omitted here.

Next, the processes of the content management apparatus 100 and the reproduction apparatus 130 in the case where the user directs the lend-out of the management table 103, the content restore and reproduction will be described. The backup process is the same as the first embodiment, and the describing will be omitted here.

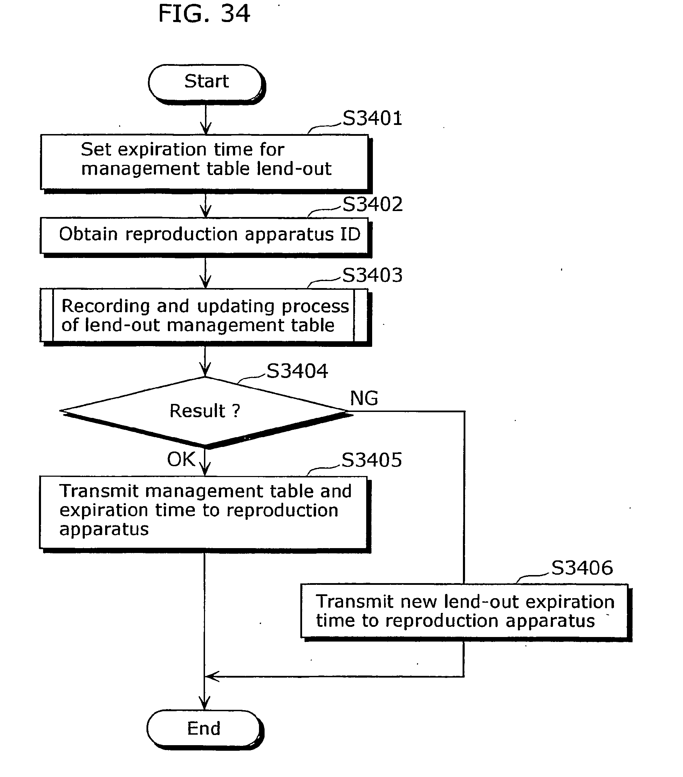

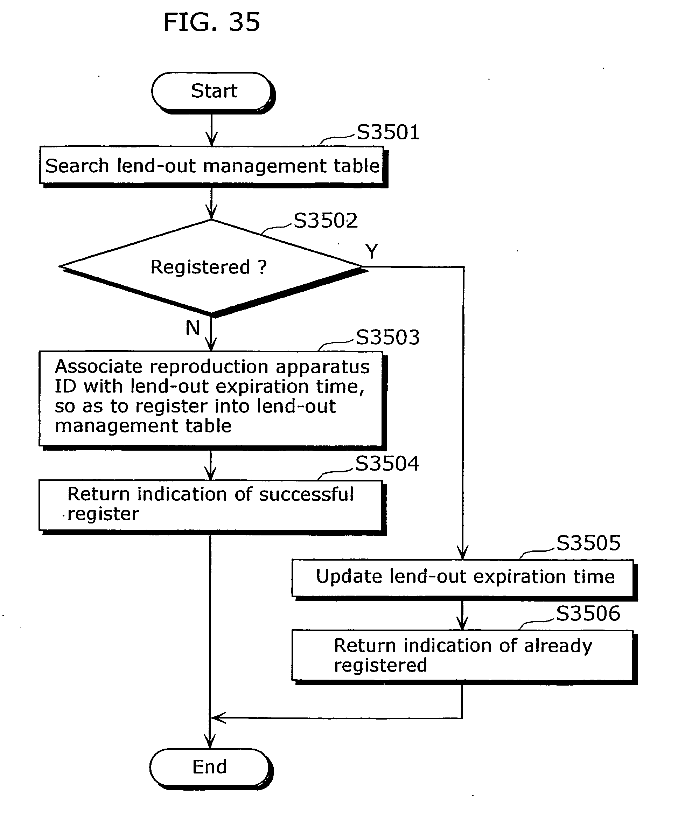

First, the lend-out process of the management table 103 will be described using FIG. 33 to FIG. 35.

When the user directs the lend-out of the management table 103, the management table lend-out and return unit 2702 displays a display 3300 which sets an expiration time for the management table 103, and waits for the user's input (S3401). When the user (i) inputs the lend-out expiration time into the lend-out expiration time input area 3301, and (ii) pushes the lend-out button 3302 for the management table 103, the management table lend-out and return unit 2702 obtains the apparatus unique ID of the reproduction apparatus 130 (S3402). The management table lend-out and return unit 2702 searches the obtained apparatus unique ID in the lend-out management table 2701 (S3501).

As a result of the search, in the case where the apparatus unique ID is not discovered (N in S3502), the management table lend-out and return unit 2702 associates the obtained apparatus unique ID with the lend-out expiration time, so as to record the associated information into the lend-out management table 2701 (S3503). When the recording into the lend-out management table 2701 is successful (OK in S3404), the management table lend-out and return unit 2702 transmits the lend-out expiration time inputted by the user and the management table 103 to the reproduction apparatus 130 (S3405).

For example, in the case where the apparatus unique ID of the reproduction apparatus 130 to which the management table 103 is lent out is "1234", and "12:00, December 24, 2003" is specified as the lend-out expiration time for the management table 103, "1234" and "200312241200" are associated with each other, and stored into the member 3201 of the lend-out information management table.

When the recording is successful, the management table lend-out and return unit 2702 transmits the lend-out expiration time inputted by the user and the management table 103 to the reproduction apparatus 130 (S3405).

The reproduction apparatus 130 which has received the management table 103 and the lend-out expiration time from the content management apparatus 100 stores the received management table 103 and the lend-out expiration time into the storage unit 1311.

On the other hand, in the case where the same apparatus unique ID is stored in the lend-out management table 2701 (Y in S3502), the management table lend-out and return unit 2702 updates the lend-out expiration time associated in the lend-out management table 2701 to the lend-out expiration time newly inputted by the user (S3505).

For example, it is assumed that "1234" and "200312241200" are associated and stored in the lend-out management table 2701. When the user specifies the expiration time, "15:30, January 15, 2004", and attempts to lend out the management table 103, the management table lend-out and return unit 2702 updates the entry in which "1234" and "200312241200" are associated and stored in the lend-out management table 2701, so that "1234" and "200401151530" are associated.

When the lend-out expiration time is successfully updated, the management table lend-out and return unit 2702 transmits the new lend-out expiration time to the reproduction apparatus 130 (S3406).

The reproduction apparatus 130 which has received the new lend-out expiration time from the content management apparatus 100 stores the newly received lend-out expiration time into the storage unit 1311.

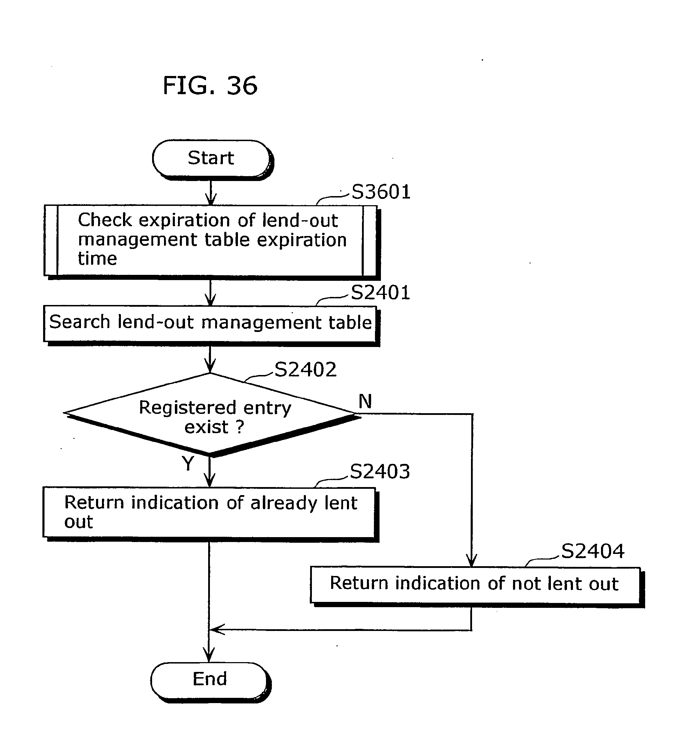

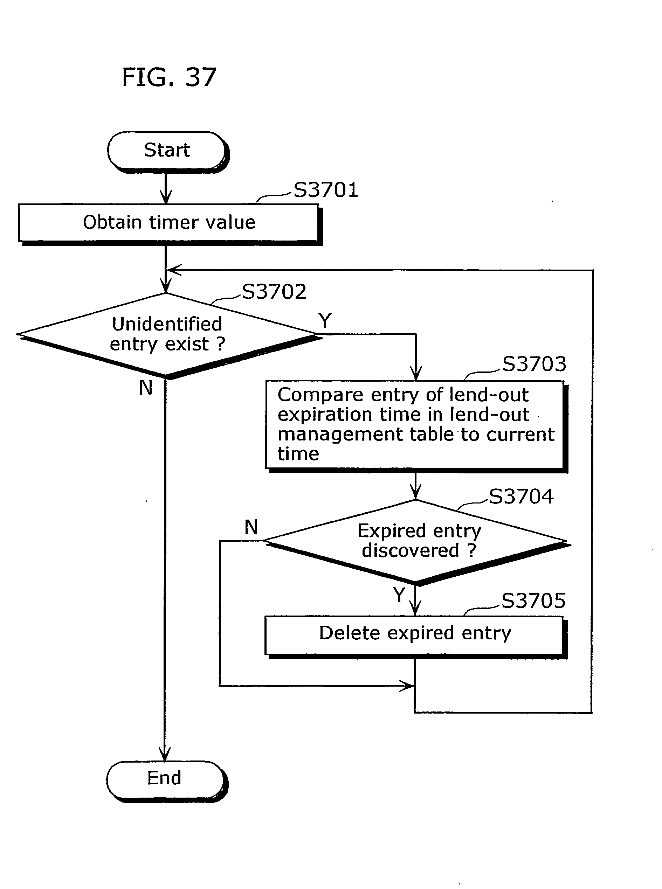

Next, the restore process will be described using FIG. 36 and FIG. 37.

When the user directs restore, prior to the restore, the restore unit 2703 requests the lend-out information management unit 2704 to delete the entry whose expiration time is expired within the lend-out management table 2701 (S3601).

The information management unit 2704 which has received the request obtains the current time from the timer 2705 (S3701). When the current time is successfully obtained, the lend-out information management unit 2704 compares the entry of the lend-out expiration time to the current time (S3703), so as to check whether or not the expired entry exists. When the expired entry exists (Y in S3704), the expired entry gets deleted (S3705).

The rest of the restore process is the same as the second embodiment, thus the describing will be omitted.

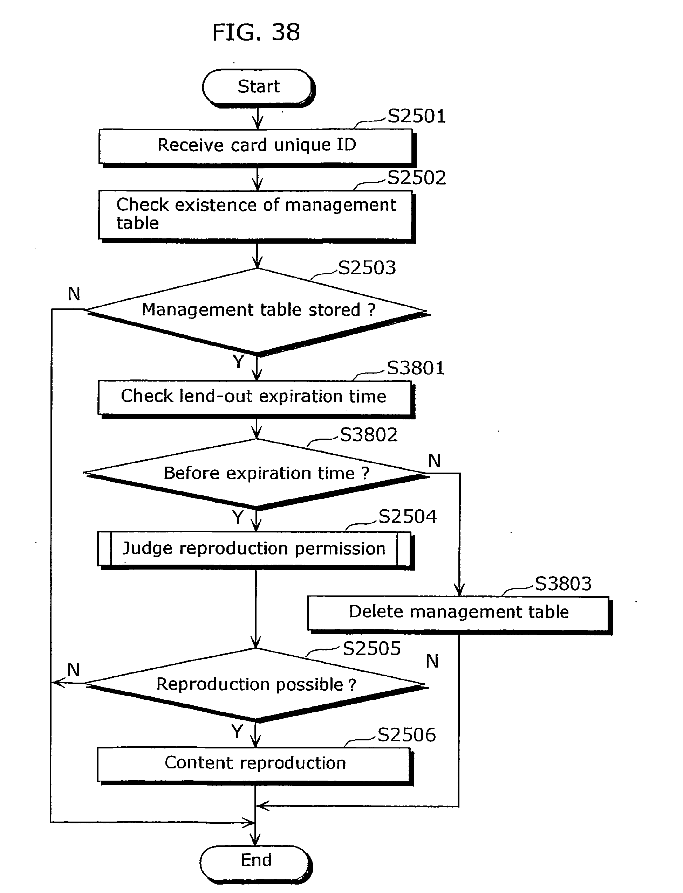

Finally, using FIG. 38, the content reproduction process in the reproduction apparatus 130 will be described. Here, the process for judging whether or not content can be reproduced using the management table 103 lent out by the reproduction apparatus 130 will be described. Here, the process in which the reproduction apparatus 130 is connected to the content management apparatus 100, so as to cause the content management apparatus 100 to judge whether or not the content can be reproduced has been already described in the first embodiment, thus the describing will be omitted here.

When the memory card 120 is inserted into the reproduction apparatus 130, and the content reproduction is directed by the user (S2003), the reproduction unit 131 obtains the card unique ID 122 from the memory card 120 (S2501). When the card unique ID 122 is successfully obtained, the reproduction unit 131 checks whether or not the management table 103 is stored in the storage unit 1311 of the reproduction apparatus 130 (S2502).

In the case where the management table 103 is stored (Y in S2503), the reproduction unit 131 checks the lend-out expiration time stored in the storage unit 1311 (S3801), and compares to the timer. As a result of the comparison, in the case where the current time is valid (Y in S3802), the reproduction unit 131 judges whether or not the content can be reproduced, using the management table 103 stored in the reproduction apparatus 130 (S2504)..

On the other hand, in the case where the lend-out expiration time is expired (N in S3802), the reproduction unit 131 deletes the management table 103 stored in the storage unit 1311 (S3803), and stops the reproduction process.

The process for judging whether or not the content can be reproduced using the management table 103 stored in the reproduction apparatus 130 is the same as the second embodiment, thus the describing will be omitted.

The process for returning the management table 103 from the reproduction apparatus 130 to the content management apparatus 100 is the same as the second embodiment, thus the describing will be omitted.

As described above, even in the case where the management table 103 is not returned from the reproduction apparatus 130, when the expiration time of the management table specified by the user expires, the management table lent out can be made invalid. Thus, restore can be executed again, the restore being prohibited while the management table was lent out.

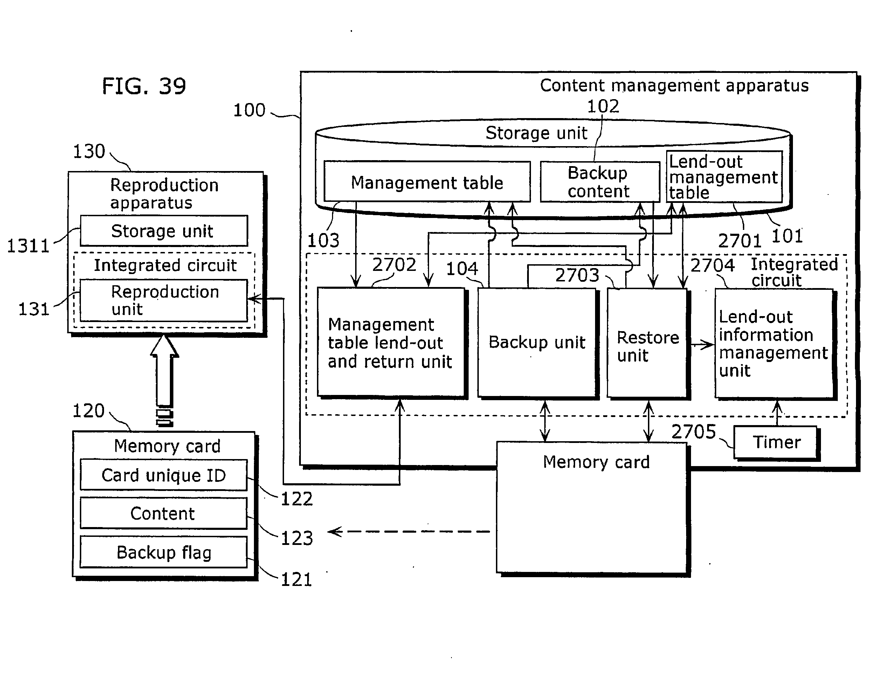

Also, the components surrounded by the broken lines in the content management apparatus as shown in FIG. 39, that is, the backup unit 104, the restore unit 2703, the management table lend-out and return unit 2702 and the lend-out information management unit 2704 may be realized by the integrated circuit. Similarly, the component surrounded by the broken lines in the reproduction apparatus 130 as shown in FIG.39, that is, the reproduction unit 131 may be realized by the integrated circuit.

Although only some exemplary embodiments of this invention have been described in detail above, those skilled in the art will readily appreciate that many modifications are possible in the exemplary embodiments without materially departing from the novel teachings and advantages of this invention. Accordingly, all such modifications are intended to be included within the scope of this invention.

### Industrial Applicability

The content management apparatus according to the present invention can be applied to an apparatus and the like which prevent illegal duplication of content, backup and restore content.

## Claims

1. A content management apparatus (100) which manages a content stored in a portable medium, the apparatus comprising:
a content storage unit (101) operable to store a content,
**characterized by** further comprising:
a backup unit (104) operable to (i) duplicate a content (123) stored in a first portable medium (10) into the content storage unit (101) and (ii) associate the content (102) with a medium identifier of the first portable medium (10), and store the associated information into a management table (103) inside the content management apparatus (100), in the case where the content stored in the first portable medium (10) is requested to be backed up into the content storage unit (101);
a restore unit (105) operable to (i) duplicate the content (102) duplicated in the content storage unit (101) into a second portable medium (11) and (ii) replace the medium identifier of the first portable medium (10) stored in the management table (103) with a medium identifier of the second portable medium (11), in the case where the content duplicated in the content storage unit (101) is requested to be restored into the second portable medium (11); and
a management table processing unit (106) operable to transmit, to a reproduction apparatus (130), reproduction judgment information which is based on the medium identifier stored in the management table (103), for judging a permission to reproduce the content, when the reproduction apparatus (130) attempts to reproduce the content stored in the portable medium.

2. A content management apparatus according to claim 1,
wherein in the case where a medium identifier of the portable medium is stored in the management table, the portable medium storing the content that the reproduction apparatus attempts to reproduce, the management table processing unit transmits, to the reproduction apparatus, the reproduction judgment information indicating a permission for reproducing the content.

3. A content management apparatus according to claim 1,
wherein the reproduction judgment information is the management table.

4. A content management apparatus according to claim 3,
wherein the management table processing unit (i) transmits the management table to the reproduction apparatus, and (ii) stores, into a management table storage unit, transmission completion information indicating that the management table has been transmitted, and
only in the case where the transmission completion information is not stored in the management table storage unit, the restore unit duplicates the content duplicated in the content storage unit into the second portable medium.

5. A content management apparatus according to claim 4,
wherein the transmission completion information is the reproduction apparatus identifier.

6. A content management apparatus according to claim 4,
wherein in the case where the reproduction apparatus informs the management table processing unit that the management table is not necessary, the management table processing unit deletes the transmission completion information stored in the management table storage unit.

7. A content management apparatus according to claim 4,
further comprising a clock showing time,
wherein in the case where the reproduction apparatus requests transmission of the management table, the management table processing unit stores, into the management table storage unit, an expiration time of the management table to be transmitted, and
in the case where time shown by the clock exceeds the expiration time, the management table processing unit deletes the transmission completion information stored in the management table storage unit.

8. A reproduction apparatus (130) which reproduces a content stored in a portable medium, the apparatus being
**characterized by** comprising:
a request unit (132) operable to request, to a content management apparatus (100) according to claim 1, transmission of reproduction judgment information which is based on the medium identifier associated with said content stored in the management table of the content management apparatus (100), for judging a permission to reproduce the content;
a reception unit operable to receive the reproduction judgment information from the content management apparatus (100); and
a reproduction unit (131) operable to reproduce the content only in the case where the reproduction judgment information received by the reception unit indicates a permission for reproducing the content.

9. A content management method which manages a content stored in a portable medium, the method being **characterized by** comprising:
(a-i) duplicating a content stored in a first portable medium (10) into a content storage unit (101) of a content management apparatus (100) and (a-ii) associating the content with a medium identifier of the first portable medium, and storing the associated information into a management table (103) inside the content management apparatus, in the case where the content stored in the first portable medium is requested to be backed up into the content storage unit;
(b-i) duplicating the content duplicated in the content storage unit into a second portable medium (11) and (b-ii) replacing the medium identifier of the first portable medium stored in the management table with a medium identifier of the second portable medium, in the case where the content duplicated in the content storage unit is requested to be restored into the second portable medium; and
transmitting, to a reproduction apparatus (130), reproduction judgment information which is based on the medium identifier stored in the management table, for judging a permission to reproduce the content, when the reproduction apparatus attempts to reproduce the content stored in the portable medium.

10. A reproduction method for reproducing a content stored in a portable medium, the method being **characterized by** comprising:
requesting, to a content management apparatus (100) according to claim 1, transmission of reproduction judgment information which is based on the medium identifier associated with said content stored in the management table (103) of the content management apparatus, for judging a permission to reproduce the content;
receiving the reproduction judgment information from the content management apparatus; and
reproducing the content only in the case where the received reproduction judgment information indicates a permission to reproduce the content.

11. A computer program product comprising computer executable code instructions, which when executed on a computer, causes said computer to execute the steps of the content management method according to claim 9 for managing a content stored in a portable medium.

12. A computer program product comprising computer executable code instructions, wich, when executed on a computer, causes said computer to execute the steps of the reproduction method according to claim 10 for reproducing a content stored in a portable medium.

13. A computer-readable storage medium in which a program for managing a content stored in a portable medium is stored, the program, when executed on a computer, causing the computer to execute the steps of the content management method according to claim 9.

14. A computer-readable storage medium in which a program for reproducing a content stored in a portable medium is stored, the program, when executed on a computer, causing the computer to execute the steps of the reproduction method according to claim 10.

15. An integrated circuit which manages a content stored in a portable medium, the circuit being **characterized by** comprising:
a backup unit (104) operable to (i) duplicate a content (123) stored in a first portable medium (10) into a content storage unit (101) of a content management apparatus (100) and (ii) associate the content with a medium identifier of the first portable medium, and store the associated information into a management table (103) inside the content management apparatus, in the case where the content stored in the first portable medium is requested to be backed up into the content storage unit;
a restore unit (105) operable to (i) duplicate the content duplicated in the content storage unit into a second portable medium (11) and (ii) replace the medium identifier of the first portable medium stored in the management table with a medium identifier of the second portable medium, in the case where the content duplicated in the content storage unit is requested to be restored into the second portable medium; and
a management table processing unit operable to transmit, to a reproduction apparatus (130), reproduction judgment information which is based on the medium identifier stored in the management table, for judging a permission to reproduce the content, when the reproduction apparatus attempts to reproduce the content stored in the portable medium.

16. An integrated circuit which reproduces content stored in a portable medium, the circuit being
**characterized by** comprising:
a request unit (132) operable to request, to a content management apparatus (100) according to claim 1, transmission of reproduction judgment information which is based on the medium identifier associated with said content stored in the management table (103) of the content management apparatus (100), for judging a permission to reproduce the content;
a reception unit operable to receive the reproduction judgment information from the content management apparatus (100); and
a reproduction unit (131) operable to reproduce the content only in the case where the reproduction judgment information received by the reception unit indicates a permission for reproducing the content.

## Patentansprüche

1. Inhaltsverwaltungsvorrichtung (100), die einen in einem tragbaren Medium gespeicherten Inhalt verwaltet, mit:
einer Inhaltsspeichereinheit (101), die so betreibbar ist, dass sie einen Inhalt speichert,
**dadurch gekennzeichnet, dass** sie weiterhin Folgendes aufweist:
eine Sicherungseinheit (104), die so betreibbar ist, dass sie (1) einen in einem ersten tragbaren Medium (10) gespeicherten Inhalt (123) in die Inhaltsspeichereinheit (101) kopiert und (II) den Inhalt (102) mit einem Medium-Identifikator des ersten tragbaren Mediums (10) verknüpft, und in dem Fall, dass der in dem ersten tragbaren Medium (10) gespeicherte Inhalt in der Inhaltsspeichereinheit (101) gesichert werden soll, die verknüpften Informationen in einer Verwaltungstabelle (103) in der Inhaltsverwaltungsvorrichtung (100) speichert;
eine Umspeichereinheit (105), die so betreibbar ist, dass sie (I) den in die Inhaltsspeichereinheit (101) kopierten Inhalt (102) in ein zweites tragbares Medium (11) kopiert und in dem Fall, dass der in die Inhaltsspeichereinheit (101) kopierte Inhalt in das zweite tragbare Medium (11) umgespeichert werden soll, (II) den in der Verwaltungstabelle (103) gespeicherten Medium-Identifikator des ersten tragbaren Mediums (10) durch einen Medium-Identifikator des zweiten tragbaren Mediums (11) ersetzt; und
eine Verwaltungstabellen-Verarbeitungseinheit (106), die so betreibbar ist, dass sie Wiedergabe-Entscheidungsinformationen, die auf dem in der Verwaltungstabelle (103) gespeicherten Medium-Identifikator beruhen, zum Entscheiden einer Genehmigung zum Wiedergeben des Inhalts an eine Wiedergabevorrichtung (130) sendet, wenn die Wiedergabevorrichtung (130) versucht, den in dem tragbaren Medium gespeicherten Inhalt wiederzugeben.

2. lnhaltsverwaltungsvorrichtung nach Anspruch 1, **dadurch gekennzeichnet, dass** in dem Fall, dass ein Medium-Identifikator des tragbaren Mediums in der Verwaltungstabelle gespeichert wird, das tragbare Medium den Inhalt speichert, den die Wiedergabevorrichtung zu wiedergeben versucht, und die Verwaltungstabellen-Verarbeitungseinheit die Wiedergabe-Entscheidungsinformationen, die eine Genehmigung zum Wiedergeben des Inhalts angeben, an die Verwaltungstabellen-Verarbeitungseinheit sendet.

3. Inhaltsverwaltungsvorrichtung nach Anspruch 1, **dadurch gekennzeichnet, dass** die Wiedergabe-Entscheidungsinformationen die Verwaltungstabelle sind.

4. Inhaltsverwaltungsvorrichtung nach Anspruch 3, **dadurch gekennzeichnet, dass** die Verwaltungstabellen-Verarbeitungseinheit (I) die Verwaltungstabelle an die Wiedergabevorrichtung sendet und (II) Übertragungsbeendigungsinformationen, die angeben, dass die Verwaltungstabelle übertragen worden ist, in einer Verwaltungstabellen-Speichereinheit speichert, und nur in dem Fall, dass die Übertragungsbeendigungsinformationen nicht in der Verwaltungstabellen-Speichereinheit gespeichert sind, die Umspeichereinheit den in die Inhaltsspeichereinheit kopierten Inhalt in das zweite tragbare Medium kopiert.

5. Inhaltsverwaltungsvorrichtung nach Anspruch 4, **dadurch gekennzeichnet, dass** die Übertragungsbeendigungsinformationen der Identifikator der Wiedergabevorrichtung sind.

6. Inhaltsverwaltungsvorrichtung nach Anspruch 4, **dadurch gekennzeichnet, dass** in dem Fall, dass die Wiedergabevorrichtung der Verwaltungstabellen-Verarbeitungseinheit mitteilt, dass die Verwaltungstabelle nicht erforderlich ist, die Verwaltungstabellen-Verarbeitungseinheit die in der Verwaltungstabellen-Speichereinheit gespeicherten Übertragungsbeendigungsinformationen löscht.

7. Inhaltsverwaltungsvorrichtung nach Anspruch 4, die weiterhin einen Taktgeber, der die Zeit angibt, aufweist,
**dadurch gekennzeichnet, dass**
in dem Fall, dass die Wiedergabevorrichtung die Übertragung der Verwaltungstabelle anfordert, die Verwaltungstabellen-Verarbeitungseinheit eine Ablaufzeit der zu übertragenden Verwaltungstabelle in der Verwaltungstabellen-Speichereinheit speichert und
in dem Fall, dass die von dem Taktgeber angegebene Zeit die Ablaufzeit überschreitet, die Verwaltungstabellen-Verarbeitungseinheit die in der Verwaltungstabellen-Speichereinheit gespeicherten Übertragungsbeendigungsinformationen löscht.

8. Wiedergabevorrichtung (130), die einen in einem tragbaren Medium gespeicherten Inhalt wiedergibt, **dadurch gekennzeichnet, dass** sie Folgendes aufweist:
eine Anforderungseinheit (132), die so betreibbar ist, dass sie eine Anforderung zur Übertragung von Wiedergabe-Entscheidungsinformationen, die auf dem Medium-Identifikator beruhen, der mit dem in der Verwaltungstabelle der Inhaltsverwaltungsvorrichtung (100) gespeicherten Inhalt verknüpft ist, zum Entscheiden einer Genehmigung zum Wiedergeben des Inhalts an die Inhaltsverwaltungsvorrichtung (100) nach Anspruch 1 richtet;
eine Empfangseinheit, die so betreibbar ist, dass sie die Wiedergabe-Entscheidungsinformationen von der Inhaltsverwaltungsvorrichtung (100) empfängt; und
eine Wiedergabeeinheit (131), die so betreibbar ist, dass sie den Inhalt nur in dem Fall wiedergibt, dass die mit der Empfangseinheit empfangenen Wiedergabe-Entscheidungsinformationen eine Genehmigung zum Wiedergeben des Inhalts angeben.

9. lnhaltsverwaltungsverfahren, das einen in einem tragbaren Medium gespeicherten Inhalt verwaltet, **dadurch gekennzeichnet, dass** es Folgendes aufweist:
(a-I) Kopieren eines in einem ersten tragbaren Medium (10) gespeicherten Inhalts in eine Inhaltsspeichereinheit (101) einer Inhaltsverwaltungsvorrichtung (100) und (a-II) Verknüpfen des Inhalts mit einem Medium-Identifikator des ersten tragbaren Mediums, und in dem Fall, dass der in dem ersten tragbaren Medium gespeicherte Inhalt in der Inhaltsspeichereinheit gesichert werden soll, Speichern der verknüpften Informationen in einer Verwaltungstabelle (103) in der Inhaltsverwaltungsvorrichtung;
(b-I) Kopieren des in die Inhaltsspeichereinheit kopierten Inhalts in ein zweites tragbares Medium (11), und in dem Fall, dass der in die Inhaltsspeichereinheit kopierte Inhalt in das zweite tragbare Medium umgespeichert werden soll, (b-II) Ersetzen des in der Verwaltungstabelle gespeicherten Medium-Identifikators des ersten tragbaren Mediums durch einen Medium-Identifikator des zweiten tragbaren Mediums; und
Senden von Wiedergabe-Entscheidungsinformationen, die auf dem in der Verwaltungstabelle gespeicherten Medium-Identifikator beruhen, zum Entscheiden einer Genehmigung zum Wiedergeben des Inhalts an eine Wiedergabevorrichtung (130), wenn die Wiedergabevorrichtung versucht, den in dem tragbaren Medium gespeicherten Inhalt wiederzugeben.

10. Wiedergabeverfahren zum Wiedergeben eines in einem tragbaren Medium gespeicherten Inhalts, **dadurch gekennzeichnet, dass** es Folgendes aufweist:
Richten einer Anforderung an eine Inhaltsverwaltungsvorrichtung (100) nach Anspruch 1 zur Übertragung von Wiedergabe-Entscheidungsinformationen, die auf dem Medium-Identifikator beruhen, der mit dem in der Verwaltungstabelle (103) der Inhaltsverwaltungsvorrichtung gespeicherten Inhalt verknüpft ist, zum Entscheiden einer Genehmigung zum Wiedergeben des Inhalts;
Empfangen der Wiedergabe-Entscheidungsinformationen von der Inhaltsverwaltungsvorrichtung; und
Wiedergeben des Inhalts nur in dem Fall, dass die empfangenen Wiedergabe-Entscheidungsinformationen eine Genehmigung zum Wiedergeben des Inhalts angeben.

11. Computerprogrammprodukt mit auf einem Computer ausführbaren Codebefehlen, die, wenn sie auf einem Computer ausgeführt werden, den Computer die Schritte des Inhaltsverwaltungsverfahrens nach Anspruch 9 zum Verwalten eines in einem tragbaren Medium gespeicherten Inhalts ausführen lassen.

12. Computerprogrammprodukt mit auf einem Computer ausführbaren Codebefehlen, die, wenn sie auf einem Computer ausgeführt werden, den Computer die Schritte des Wiedergabeverfahrens nach Anspruch 10 zum Wiedergeben eines in einem tragbaren Medium gespeicherten Inhalts ausführen lassen.

13. Maschinenlesbares Speichermedium, in dem ein Programm zum Verwalten eines in einem tragbaren Medium gespeicherten Inhalts gespeichert ist, wobei das Programm, wenn es auf einem Computer abgearbeitet wird, den Computer die Schritte des Inhaltsverwaltungsverfahrens nach Anspruch 9 ausführen lässt.

14. Maschinenlesbares Speichermedium, in dem ein Programm zum Wiedergeben eines in einem tragbaren Medium gespeicherten Inhalts gespeichert ist, wobei das Programm, wenn es auf einem Computer abgearbeitet wird, den Computer die Schritte des Wiedergabeverfahrens nach Anspruch 10 ausführen lässt.

15. Integrierter Schaltkreis, der einen in einem tragbaren Medium gespeicherten Inhalt verwaltet, **dadurch gekennzeichnet, dass** er Folgendes aufweist:
eine Sicherungseinheit (104), die so betreibbar ist, dass sie (I) einen in einem ersten tragbaren Medium (10) gespeicherten Inhalt (123) in eine Inhaltsspeichereinheit (101) einer Inhaltsverwaltungsvorrichtung (100) kopiert und (II) den Inhalt mit einem Medium-Identifikator des ersten tragbaren Mediums verknüpft, und in dem Fall, dass der in dem ersten tragbaren Medium gespeicherte Inhalt in der Inhaltsspeichereinheit gesichert werden soll, die verknüpften Informationen in einer Verwaltungstabelle (103) in der Inhaltsverwaltungsvorrichtung speichert;
eine Umspeichereinheit (105), die so betreibbar ist, dass sie (1) den in die Inhaltsspeichereinheit kopierten Inhalt in ein zweites tragbares Medium (11) kopiert, und in dem Fall, dass der in die Inhaltsspeichereinheit kopierte Inhalt in das zweite tragbare Medium umgespeichert werden soll, (II) den in der Verwaltungstabelle gespeicherten Medium-Identifikator des ersten tragbaren Mediums durch einen Medium-Identifikator des zweiten tragbaren Mediums ersetzt; und
eine Verwaltungstabellen-Verarbeitungseinheit, die so betreibbar ist, dass sie Wiedergabe-Entscheidungsinformationen, die auf dem in der Verwaltungstabelle gespeicherten Medium-Identifikator beruhen, zum Entscheiden einer Genehmigung zum Wiedergeben des Inhalts an eine Wiedergabevorrichtung (130) sendet, wenn die Wiedergabevorrichtung versucht, den in dem tragbaren Medium gespeicherten Inhalt wiederzugeben.

16. Integrierter Schaltkreis, der einen in einem tragbaren Medium gespeicherten Inhalt wiedergibt, **dadurch gekennzeichnet, dass** er Folgendes aufweist:
eine Anforderungseinheit (132), die so betreibbar ist, dass sie eine Anforderung zur Übertragung von Wiedergabe-Entscheidungsinformationen, die auf dem Medium-Identifikator beruhen, der mit dem in der Verwaltungstabelle (103) der Inhaltsverwaltungsvorrichtung (100) gespeicherten Inhalt verknüpft ist, zum Entscheiden einer Genehmigung zum Wiedergeben des Inhalts an eine Inhaltsverwaltungsvorrichtung (100) nach Anspruch 1 richtet;
eine Empfangseinheit, die so betreibbar ist, dass sie die Wiedergabe-Entscheidungsinformationen von der Inhaltsverwaltungsvorrichtung (100) empfängt; und
eine Wiedergabeeinheit (131), die so betreibbar ist, dass sie den Inhalt nur in dem Fall wiedergibt, dass die mit der Empfangseinheit empfangenen Wiedergabe-Entscheidungsinformationen eine Genehmigung zum Wiedergeben des Inhalts angeben.

## Revendications

1. Dispositif de gestion de contenu (100) qui gère un contenu mémorisé dans un support portable, le dispositif comprenant :
une unité de mémorisation de contenu (101) pouvant être mise en oeuvre pour mémoriser un contenu,
**caractérisé par** le fait de comprendre en outre :
une unité de sauvegarde (104) pouvant être mise en oeuvre pour (i) dupliquer un contenu (123), mémorisé dans un premier support portable (10), dans l'unité de mémorisation de contenu (101) et (ii) associer le contenu (102) à un identificateur de support du premier support portable (10) et mémoriser les informations associées dans une table de gestion (103) à l'intérieur du dispositif de gestion de contenu (100), dans le cas où il est demandé que le contenu mémorisé dans le premier support portable (10) soit sauvegardé dans l'unité de mémorisation de contenu (101),
une unité de restauration (105) pouvant être mise en oeuvre pour (i) dupliquer le contenu (102), dupliqué dans l'unité de mémorisation de contenu (101), dans un second support portable (11) et (ii) remplacer l'identificateur de support du premier support portable (10) mémorisé dans la table de gestion (103) par un identificateur de support du second support portable (11), dans le cas où il est demandé que le contenu dupliqué dans l'unité de mémorisation de contenu (101) soit restauré dans le second support portable (11), et
une unité de traitement de table de gestion (106) pouvant être mise en oeuvre pour transmettre, à un dispositif de reproduction (130) des informations d'évaluation de reproduction qui sont fondées sur l'identificateur de support mémorisé dans la table de gestion (103), pour évaluer une permission de reproduire le contenu, lorsque le dispositif de reproduction (130) tente de reproduire le contenu mémorisé dans le support portable.

2. Dispositif de gestion de contenu selon la revendication 1,
dans lequel, dans le cas où un identificateur de support du support portable est mémorisé dans la table de gestion, le support portable mémorisant le contenu que le dispositif de reproduction tente de reproduire, l'unité de traitement de table de gestion transmet, au dispositif de reproduction, des informations d'évaluation de reproduction indiquant une permission de reproduire le contenu.

3. Dispositif de gestion de contenu selon la revendication 1,
dans lequel les informations d'évaluation de reproduction sont la table de gestion.

4. Dispositif de gestion de contenu selon la revendication 3,
dans lequel l'unité de traitement de table de gestion (i) transmet la table de gestion au dispositif de reproduction, et (ii) mémorise, dans une unité de mémorisation de table de gestion, des informations d'achèvement de transmission indiquant que la table de gestion a été transmise, et
seulement dans le cas où les informations d'achèvement de transmission ne sont pas mémorisées dans l'unité de mémorisation de table de gestion, l'unité de restauration duplique le contenu, dupliqué dans l'unité de mémorisation de contenu, dans le second support portable.

5. Dispositif de gestion de contenu selon la revendication 4,
dans lequel les informations d'achèvement de transmission sont l'identificateur de dispositif de reproduction.

6. Dispositif de gestion de contenu selon la revendication 4,
dans lequel, dans le cas où le dispositif de reproduction informe l'unité de traitement de table de gestion que la table de gestion n'est pas nécessaire, l'unité de traitement de table de gestion supprime les informations d'achèvement de transmission mémorisées dans l'unité de mémorisation de table de gestion.

7. Dispositif de gestion de contenu selon la revendication 4,
comprenant en outre une horloge indiquant le temps,
dans lequel, dans le cas où le dispositif de reproduction demande la transmission de la table de gestion, l'unité de traitement de table de gestion mémorise, dans l'unité de mémorisation de table de gestion, un temps d'expiration de la table de gestion à transmettre, et
dans le cas où le temps indiqué par l'horloge dépasse le temps d'expiration, l'unité de traitement de table de gestion supprime les informations d'achèvement de transmission mémorisées dans l'unité de mémorisation de table de gestion.

8. Dispositif de reproduction (130) qui reproduit un contenu mémorisé dans un support portable, le dispositif étant **caractérisé par** le fait de comprendre:
une unité de demande (132) pouvant être mise en oeuvre pour demander, à un dispositif de gestion de contenu (100) selon la revendication 1, la transmission d'informations d'évaluation de reproduction, qui sont fondées sur l'identificateur de support associé audit contenu mémorisé dans la table de gestion du dispositif de gestion de contenu (100), afin d'évaluer une permission de reproduire le contenu,
une unité de réception pouvant être mise en oeuvre pour recevoir les informations d'évaluation de reproduction provenant du dispositif de gestion de contenu (100), et
une unité de reproduction (131) pouvant être mise en oeuvre pour reproduire le contenu seulement dans le cas où les informations d'évaluation de reproduction reçues par l'unité de réception indiquent une permission de reproduire le contenu.

9. Procédé de gestion de contenu qui gère un contenu mémorisé dans un support portable, le procédé étant **caractérisé par** le fait de comprendre les étapes consistant à :
(a-i) dupliquer un contenu, mémorisé dans un premier support portable (10), dans une unité de mémorisation de contenu (101) d'un dispositif de gestion de contenu (100) et (a-ii) associer le contenu à un identificateur de support du premier support portable et mémoriser les informations associées dans une table de gestion (103) à l'intérieur du dispositif de gestion de contenu, dans le cas où il est demandé que le contenu mémorisé dans le premier support portable soit sauvegardé dans l'unité de mémorisation de contenu,
(b-i) dupliquer le contenu, dupliqué dans l'unité de mémorisation de contenu, dans un second support portable (11) et (b-ii) remplacer l'identificateur de support du premier support portable mémorisé dans la table de gestion par un identificateur de support du second support portable, dans le cas où il est demandé que le contenu dupliqué dans l'unité de mémorisation de contenu soit restauré dans le second support portable, et
transmettre, à un dispositif de reproduction (130), des informations d'évaluation de reproduction qui sont fondées sur l'identificateur de support mémorisé dans la table de gestion, afin d'évaluer une permission de reproduire le contenu, lorsque le dispositif de reproduction tente de reproduire le contenu mémorisé dans le support portable.

10. Procédé de reproduction destiné à reproduire un contenu mémorisé dans un support portable, le procédé étant **caractérisé par** le fait de comprendre les étapes consistant à :
demander, à un dispositif de gestion de contenu (100) selon la revendication 1, la transmission d'informations d'évaluation de reproduction, qui sont fondées sur l'identificateur de support associé audit contenu mémorisé dans la table de gestion (103) du dispositif de gestion de contenu, afin d'évaluer une permission de reproduire le contenu,
recevoir les informations d'évaluation de reproduction provenant du dispositif de gestion de contenu, et
reproduire le contenu seulement dans le cas où les informations d'évaluation de reproduction reçues indiquent une permission de reproduire le contenu.

11. Produit de programme informatique comprenant des instructions de code exécutables par un ordinateur qui, lorsqu'elles sont exécutées sur un ordinateur, amènent ledit ordinateur à exécuter les étapes du procédé de gestion de contenu selon la revendication 9 pour gérer un contenu mémorisé dans un support portable.

12. Produit de programme informatique comprenant des instructions de code exécutables par un ordinateur qui, lorsqu'elles sont exécutées sur un ordinateur, amènent ledit ordinateur à exécuter les étapes du procédé de reproduction conforme à la revendication 10 pour reproduire un contenu mémorisé dans un support portable.

13. Support de mémorisation lisible par un ordinateur, dans lequel un programme destiné à gérer un contenu mémorisé dans un support portable est mémorisé, le programme, lorsqu'il est exécuté sur un ordinateur, amenant l'ordinateur à exécuter les étapes du procédé de gestion de contenu selon la revendication 9.

14. Support de mémorisation lisible par un ordinateur, dans lequel un programme destiné à reproduire un contenu mémorisé dans un support portable est mémorisé, le programme, lorsqu'il est exécuté sur un ordinateur, amenant l'ordinateur à exécuter les étapes du procédé de reproduction selon la revendication 10.

15. Circuit intégré qui gère un contenu mémorisé dans un support portable, le circuit étant **caractérisé par** le fait de comprendre :
une unité de sauvegarde (104) pouvant être mise en oeuvre pour (i) dupliquer un contenu (123), mémorisé dans un premier support portable (10), dans une unité de mémorisation de contenu (101) d'un dispositif de gestion de contenu (100) et (ii) associer le contenu à un identificateur de support du premier support portable et mémoriser les informations associées dans une table de gestion (103) à l'intérieur du dispositif de gestion de contenu, dans le cas où il est demandé que le contenu mémorisé dans le premier support portable soit sauvegardé dans l'unité de mémorisation de contenu,
une unité de restauration (105) pouvant être mise en oeuvre pour (i) dupliquer le contenu, dupliqué dans l'unité de mémorisation de contenu, dans un second support portable (11) et (ii) remplacer l'identificateur de support du premier support portable mémorisé dans la table de gestion par un identificateur de support du second support portable, dans le cas où il est demandé que le contenu dupliqué dans l'unité de mémorisation de contenu soit restauré dans le second support portable, et
une unité de traitement de table de gestion pouvant être mise en oeuvre pour transmettre, à un dispositif de reproduction (130), des informations d'évaluation de reproduction qui sont fondées sur l'identificateur de support mémorisé dans la table de gestion, afin d'évaluer une permission de reproduire le contenu, lorsque le dispositif de reproduction tente de reproduire le contenu mémorisé dans le support portable.

16. Circuit intégré qui reproduit un contenu mémorisé dans un support portable, le circuit étant **caractérisé par** le fait de comprendre :
une unité de demande (132) pouvant être mise en oeuvre pour demander, à un dispositif de gestion de contenu (100) selon la revendication 1, la transmission d'informations d'évaluation de reproduction qui sont fondées sur l'identificateur de support associé audit contenu mémorisé dans la table de gestion (103) du dispositif de gestion de contenu (100), afin d'évaluer une permission de reproduire le contenu,
une unité de réception pouvant être mise en oeuvre pour recevoir les informations d'évaluation de reproduction provenant du dispositif de gestion de contenu (100), et
une unité de reproduction (131) pouvant être mise en oeuvre pour reproduire le contenu seulement dans le cas où les informations d'évaluation de reproduction reçues par l'unité de réception indiquent une permission de reproduire le contenu.
